# EUROPEAN PATENT SPECIFICATION

(11) **EP 2 187 563 B1**
(45) Date of publication and mention of the grant of the patent: **18.04.2012**
(21) Application number: 08800679.6
(22) Date of filing: 27.08.2008
(51) Int. Cl.: H04L 12/00

(54) **METHOD FOR MEASURING QUALITY OF SERVICE, TRANSMISSION METHOD, DEVICE AND SYSTEM OF MESSAGES**
VERFAHREN ZUR MESSUNG EINER DIENSTQUALITÄT, ÜBERTRAGUNGSVERFAHREN UND -VORRICHTUNG SOWIE NACHRICHTENSYSTEM
PROCÉDÉ DE MESURE DE QUALITÉ DE SERVICE, PROCÉDÉ DE TRANSMISSION, DISPOSITIF ET SYSTÈME DE MESSAGES

(30) Priority: 28.08.2007 CN 200710148407; 29.08.2007 CN 200710142589
(43) Date of publication of application: 19.05.2010
(73) Proprietor: Huawei Technologies Co., Ltd., Shenzhen, Guangdong Province 518129 (CN)
(72) Inventor: LIU, Ying, Guangdong Province 518129 (CN)
(74) Representative: Pfenning, Meinig & Partner GbR
(86) International application number: PCT/CN2008/072166
(87) International publication number: WO 2009/026855

(56) References cited:
- CN-A- 1 618 212
- CN-A- 1 859 237
- CN-A- 1 933 431
- US-A1- 2004 066 753
- US-A1- 2007 030 821
- US-B1- 6 775 240

## Description

### FIELD OF THE TECHNOLOGY

The present invention relates to the field of network technology, and more particularly to a method, device and system for measuring quality of service (QoS).

### BACKGROUND OF THE INVENTION

Along with the increase of service demands and the development of Internet protocol (IP) network technology, more and more real-time services are transmitted on the IP network. Voice, video, multimedia, teleconference, and other real-time services bring a new challenge to the IP network, and it is recently a hot spot how to ensure the quality of the real-time services. A Real Time Protocol (RTP) is an end to end transmission protocol, and is configured to transmit data of the real-time services, and sequence numbers (SNs), timestamps, and other information provided by the RTP provide references for a destination end of the message to restructuring the message. However, the RTP itself does not provide any guarantee on QoS of a data stream of the real-time service or guarantee of real-time transmission, and calculates QoS parameters with a Real Time Control Protocol (RTCP), so as to provide the references for the source end transmission control of the data stream. The RTCP realizes a feedback of the QoS parameters of the end to end network layer, for example, network delay, delay jitter, and fraction lost.

The QoS is usually guaranteed from two aspects. When the QoS is normal, a routine inspect is performed on the QoS to take precautions. When the QoS has problems, the problems are positioned as soon as possible, and reasons of the change of the QoS are mastered, so as to take corresponding modification measures. In a common positioning method, the QoS performance changes during the service transmission procedure are measured, and the problems are positioned according to set performance indices, for example, the network delay, the delay jitter, the fraction lost, and a threshold of each index. Attributes of the RTP/RTCP determine that the RTP/RTCP can be configured to measure the QoS parameters of the real-time services in the network. Measurement results reflect the QoS situations of the services, and are further provided for other entities, such as a resource admission control (RAC) entity, to use.

Recently, the common method for measuring QoS over the RTP/RTCP mainly includes an active measurement and a passive measurement.

In the active measurement of the QoS, it is assumed that a sender customer premises equipment (CPE) CPE-A is a message sender, a receiver CPE-B is a message receiver, and three monitors, namely, Monitor 1, Monitor 2, and Monitor 3, are set between the sender CPE-A and the receiver CPE-B. The sender CPE-A sends an RTP/RTCP SR data stream to the receiver CPE-B, and three monitors, namely, Monitor 1, Monitor 2, and Monitor 3 in sequence, are set on a path through which the RTP/RTCP SR data stream passes. In the active measurement, when monitoring the end to end RTP data stream, the monitor needs to additionally generate an RTCP sender report (RTCP SR) message/RTCP receiver report (RTCP RR) message corresponding to the RTP data, and interacts with other monitors by using extra RTCP SR/RTCP RR messages, so as to obtain QoS parameters between the monitor and other monitors.

In the active measurement, although the measurement result over network segments may be provided, the measurement result has a direct relation with the monitors set among the network segments. The more the set monitors are, the more valuable the measurement result is. However, in addition to forwarding the RTP/RTCP message, the monitors have to generate the Extra RTCP SR/RR message to interact with each other, thereby increasing the network burden.

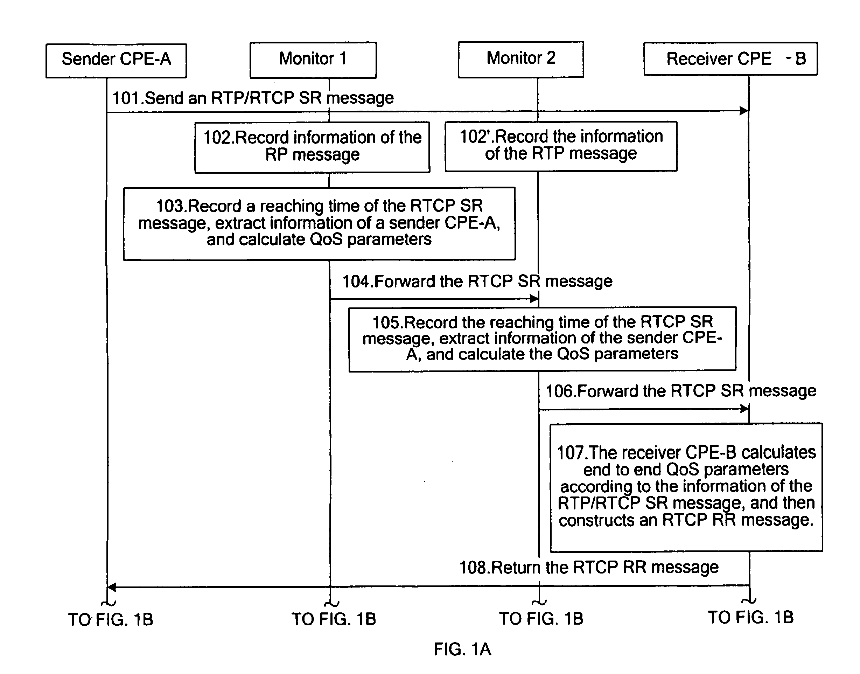

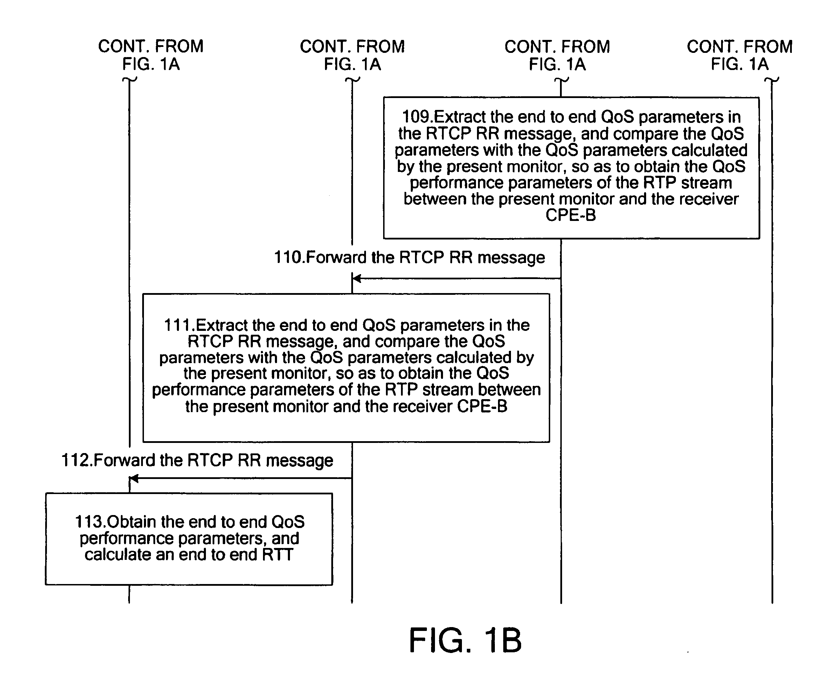

Referring to FIG 1, a schematic view of a method for passively measuring QoS over RTP/RTCP in the prior art is shown. In the passive measurement, a monitor monitors an RTP/RTCP data stream passing through the present monitor, and respectively calculates QoS parameters of the RTP/RTCP data stream between a message sender and the present monitor and between the present monitor and a message receiver. Particularly, as shown in FIG 1, two monitors, namely, Monitor 1 and Monitor 2, are set between a sender CPE-A and a receiver CPE-B, the RTP/RTCP data stream sent by the sender CPE-A to the receiver CPE-B passes through Monitor 1 and Monitor 2 in sequence. The method particularly includes the following steps.

In step 101, the sender CPE-A sends the RTP/RTCP SR message.

In step 102 and step 102', Monitor 1 and Monitor 2 records the information of the received RTP message in sequence, where the information includes a number and a transmission time delay of the RTP messages.

In step 103, when the RTCP SR message reaches Monitor 1, Monitor 1 records a reaching time of the RTCP SR message, and extracts the information of the sender CPE-A, where the information includes a sender synchronization source identifier (SSRC) and a maximum number of the sent messages. Then, a fraction lost, a delay jitter, a cumulative number of packets lost, and other QoS performance parameters of the RTP data in two successive RTCP SR message time periods are calculated during the procedure of transmitting the RTP data between the sender CPE-A and the present monitor (that is, Monitor 1).

In step 104, Monitor 1 continuously forwards the RTCP SR message to a next monitor (that is, Monitor 2).

In step 105, the processing procedure is similar to step 103. After receiving the RTCP SR message, Monitor 2 calculates the fraction lost, the delay jitter, the cumulative number of packets lost, and other QoS performance parameters of the RTP data in the two successive RTCP SR message time periods during the procedure of transmitting the RTP data between the sender CPE-A and the present monitor (that is, Monitor 2).

In step 106, the RTCP SR message is continuously forwarded to the receiver CPE-B.

In step 107, the receiver CPE-B calculates the end to end QoS parameters, including the fraction lost, the delay jitter, the cumulative number of packets lost, and a time spent for generating the RTCP RR message, according to the information of the RTP/RTCP SR message, and then generates the RTCP RR message.

In step 108, the generated RTCP RR message is returned to the sender CPE-A.

In step 109, when detecting the generated RTCP RR message returned by the receiver CPE-B, Monitor 2 extracts the end to end QoS parameters, and compares the QoS parameters with the QoS parameters calculated by the present monitor (that is, Monitor 2), so as to obtain the QoS performance parameters of the RTP stream between the present monitor and the receiver CPE-B.

In step 110, the generated RTCP RR message is continuously forwarded.

In step 111, when Monitor 1 also monitors the generated RTCP RR message, Monitor 1 calculates the QoS performance parameters of the RTP stream between the present monitor (Monitor 1) and the receiver CPE-B according to the calculation method the same as Monitor 2.

In step 112, Monitor 1 continuously forwards the generated RTCP RR message.

In step 113, the sender CPE-A finally receives the RTCP RR message, obtains the end to end QoS performance parameters, and calculates an end to end round trip time (RTT).

It can be known from the realizing procedure that in the passive measurement, although no new RTCP message is introduced, in the passive measurement, the monitor can only calculate the QoS parameters from the two ends to the present monitor instead of calculating the QoS parameters between the adjacent monitor and the present monitor, so that the passive measurement cannot realize the measurement over the network segments.

Through careful analysis and research, the inventor finds that the prior art has a disadvantage that the QoS measurement between the adjacent network segments cannot be performed without increasing the network burden.

US 2007/0030821 A1 provides a transmission parameter control apparatus that can improve transmission quality of real-time media. A fixed terminal 104 sends a RTCP (SR) to a mobile terminal 108. Then, the mobile terminal 108 sends a RTCP (RR) to the fixed terminal 104. When the RTCP (RR) received by a wireless base station 106, the signal is supplied to the clock synchronization part 210 via a branch route, and various information in the receiver report (RR) are extracted. The extracted information are supplied to the measurement part 212. The quality parameter of the real-time media in the information indicates a value for a whole section C from the fixed terminal 104 to the mobile terminal 108. Thus, for example, the jitter calculation part 214 compares a value of jitter for the whole section C with a value of jitter for the section A previously obtained (obtains difference between them), so that a jitter for the section B (=section C-section A) can be obtained. In the same way, the packet discard ratio and the delay time for the wireless communication section in the section B can be obtained. Accordingly, quality parameters of the real-time media for the section B can be obtained in the measurement part 212.

### SUMMARY OF THE INVENTION

The embodiments of the present invention are directed to a method, device and system for measuring QoS, which are capable of measuring the QoS between adjacent network segments without increasing too much network burden.

According to one aspect of the invention, a device for forwarding a Real Time Control Protocol sender report (RTCP SR) message is provided. The device comprises:
a message receiving unit, configured to receive a first RTCP SR message from a message sender or an adjacent upstream monitor;
a quality of service, QoS, parameter calculation unit, configured to calculate QoS parameters of a Real Time Protocol, RTP, data stream corresponding to the RTCP SR message between the message sender and the device;
a new message generating unit, configured to generate a second RTCP SR message, according to the first RTCP SR message received by the message receiving unit and the QoS parameters calculated by the QoS parameter calculation unit; and
a message providing unit, configured to provide the second RTCP SR message generated by the new message generating unit to an adjacent downstream monitor.

According to one aspect of the invention, a method for forwarding a Real Time Control Protocol sender report (RTCP SR) message is provided. The method comprises:
receiving, by a monitor, a first RTCP SR message from a message sender or an adjacent upstream monitor;
calculating, by monitor, quality of service, QoS, parameter of a Real Time Protocol, RTP, data stream corresponding to the RTCP SR message between the message sender and the monitor;
generating, by the monitor, a second RTCP SR message according to the first RTCP SR message and the calculated QoS parameter;
providing, the second RTCP SR message to an adjacent downstream monitor. In the procedure of forwarding the RTCP SR message according to the embodiment of the present invention, after the QoS parameters of the RTP data stream between the message sender and the present monitor are calculated, the QoS parameters are provided to the adjacent downstream monitor, and the adjacent downstream monitor needs not to give a feedback. In addition, after obtaining the QoS parameters, the adjacent downstream monitor naturally calculates the QoS parameters of the RTP data stream between the two monitors. The adjacent downstream monitor needs not to give any feedback, so the network burden is not increased too much, and the calculated QoS parameters are provided to the adjacent downstream monitor, so that the adjacent downstream monitor calculates the QoS parameters of the RTP data stream between the two monitors, thus realizing the QoS measurement between the adjacent network segments.

In the measurement of the QoS over RTP/RTCP according to the embodiment of the present invention, after receiving the RTCP SR message carrying the QoS parameters of the RTP data stream between the message sender and the adjacent upstream monitor, the QoS parameters of the RTP data stream between the adjacent upstream monitor and the present monitor are calculated. No feedback needs to be given to the adjacent upstream monitor as the QoS parameters of the RTP data stream between the message sender and the adjacent stream monitor are received, thus realizing the QoS measurement between the adjacent network segments without increasing the network burden too much.

### BRIEF DESCRIPTION OF THE DRAWINGS

FIG 1 is a schematic view of a method for passively measuring QoS over RTP/RTCP in the prior art;
FIG 2 is a flow chart of a method for measuring QoS by a first monitor according to an embodiment of the present invention;
FIG. 3 is a flow chart of a method for measuring QoS by a second monitor according to an embodiment of the present invention;
FIG 4 is an application scenario view of measuring QoS among network segments according to an embodiment of the present invention;
FIG 5 is a flow chart of an associated measurement over RTP/RTCP by monitors according to an embodiment of the present invention;
FIG 6 is another application scenario view of measuring QoS among network segments according to an embodiment of the present invention;
FIG 7 is another flow chart of the associated measurement over RTP/RTCP by the monitors according to an embodiment of the present invention;
FIG 8 is a flow chart of a method for measuring QoS by monitors according to an embodiment of the present invention;
FIG 9 is a schematic structural view of a network device according to an embodiment of the present invention;
FIG 10 is a schematic structural view of a network device according to another embodiment of the present invention;
FIG 11 is a schematic structural view of a network system according to an embodiment of the present invention;
FIG. 12 is a flow chart of a method for forwarding an RTCP SR message according to an embodiment of the present invention;
FIG. 13 is a schematic view of a format of an RTCP SR message;
FIG. 14 is a schematic view of a format of an RTP message;
FIG 15 is a flow chart of a method for measuring QoS over RTP/RTCP according to an embodiment of the present invention;
FIG. 16 is a flow chart of an application embodiment of the present invention; and
FIG. 17 is a schematic view of a format of an RTCP RR message.

### DETAILED DESCRIPTION OF THE EMBODIMENTS

Embodiments of the present invention are described in detail with the accompanying drawings.

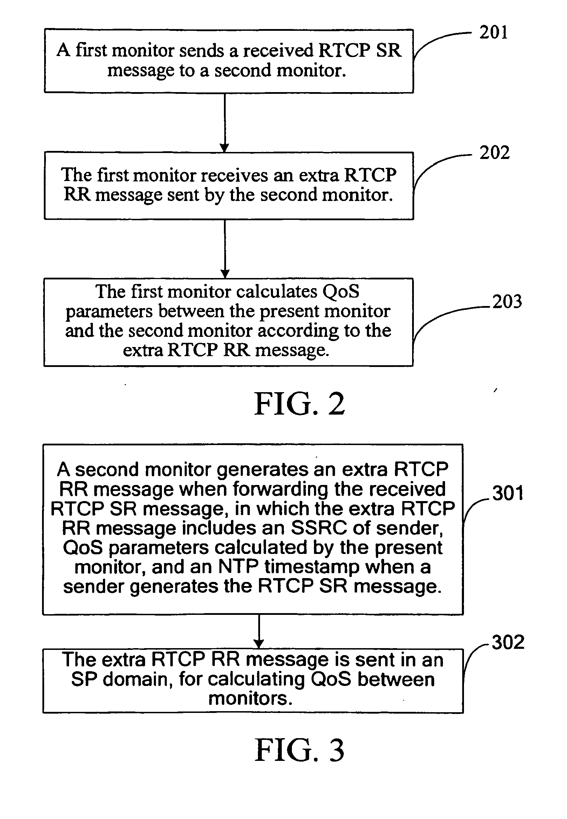

Referring to FIGs. 2 and 3, flow charts of a method for measuring QoS by a first monitor and a second monitor according to an embodiment of the present invention are shown. As shown in FIG 2, the method includes the following steps.

In step 201, the first monitor sends a received RTCP SR message to the second monitor.

In step 202, the first monitor receives an extra RTCP RR message sent by the second monitor.

In step 203, the first monitor calculates QoS parameters between the present monitor and the second monitor according to the extra RTCP RR message.

As shown in FIG 3, the method includes the following steps.

In step 301, the second monitor generates the extra RTCP RR message when forwarding the received RTCP SR message, where the extra RTCP RR message includes an SSRC of sender, QoS parameters calculated by the present monitor, and an NTP timestamp when a sender generates the RTCP SR message.

In step 302, the extra RTCP RR message is sent in an SP domain, for calculating QoS between monitors.

That is to say, in the embodiments of FIGs. 2 and 3, it is assumed that two monitors exist, when receiving the RTCP SR message corresponding to the RTP data stream, the first monitor extracts sender information in the RTCP SR message; and calculates and stores the QoS parameters of the RTP data stream reaching the present monitor, and forwards the RTCP SR message to the second monitor.

When receiving the RTCP SR message, the second monitor similarly calculates and stores the QoS parameters of the RTP data stream reaching the present monitor, and the calculating procedure is the same as that of the first monitor. When forwarding the RTCP SR message, the second monitor generates the extra RTCP RR message, and sends the extra RTCP RR message in the SP domain, where the extra RTCP RR message includes the SSRC of sender, the QoS parameters calculated by the present monitor, an NTP timestamp when the sender generates the RTCP SR message (last SR (LSR)), and a time spent for generating the extra RTCP RR message (delay since last SR (DLSR)).

When the sender information in the extra RTCP RR message received by the first monitor matches with the sender information stored in the present monitor, the QoS parameters between the present monitor and the second monitor sending the extra RTCP RR message are calculated.

In the embodiment of the present invention, the monitors measure the QoS parameters over network segments. In this embodiment, in addition to enhancing functions of the monitor itself, measuring costs of other monitors are reduced as much as possible. For example, with extra works before the measurement such as a configuration preparation or counting and calculation on measurement results performed by other entities, the monitor may measure the QoS parameters over the network segments, and the measurement result truly reflects the performance situation of the RTP data stream when passing through the network segment. Therefore, in the embodiment of the present invention, characteristics of the RTCP message are fully utilized to improve the passive measurement, so that the monitors may quickly measure the QoS parameters between the network segments. In the embodiment of the present invention, not only the problem of the network burden in the active measurement is reduced, but also the QoS parameter measurement be tween the network segments performed by the monitors is achieved.

For a certain confirmed RTP stream, the monitor (which may be the first monitor, or the second monitor, or an upstream monitor and a downstream monitor, which are relative) monitors the information of the RTP message reaching the present monitor. When the corresponding RTCP SR message passes through the monitor, the monitor records the sender information in the RTCP SR message, and extracts the sender information in the RTCP SR message. The sender information includes the SSRC of sender and a packet count; or the SSRC of sender, the packet count, and the NTP timestamp, but the present invention is not limited here. The monitor calculates the QoS parameters of the RTP stream when passing through the present monitor, and forwards the RTCP SR message to the second monitor by using the SSRC of sender of the RTP stream as an index, or using the SSRC of sender and the NTP timestamp as indices.

After receiving the RTCP SR message, the second monitor similarly extracts the sender information of the RTCP SR message, where the sender information includes the SSRC of sender and the packet count, or the SSRC of sender, the packet count, and the NTP timestamp, and calculates the QoS performance parameters of the RTP data stream passing through the present monitor. When forwarding the RTCP SR message, the second monitor generates an extra RTCP RR message, where the extra RTCP RR message includes the SSRC of sender, the QoS parameters calculated by the present monitor, the NTP timestamp when the sender generates the RTCP SR message LSR, and the time spent for generating the extra RTCP RR message DLSR, and sends the extra RTCP RR message. Meanwhile, the second monitor continuously forwards the end to end RTP/RTCP SR message normally.

After receiving the extra RTCP RR message, the first monitor extracts the sender information in the extra RTCP RR message, and determines whether the sender information matches with the sender information stored in the present monitor, and if yes, the first monitor calculates the QoS parameters between the present monitor and the second monitor sending the extra RTCP RR message. That is to say, firstly the SSRC of sender, or the SSRC of sender and the NTP timestamp in the RTCP RR message are extracted; then, the information of the QoS parameters stored previously are searched by using the SSRC of sender as an index, or using the SSRC of sender and the NTP timestamp as the indices; and the QoS performance situation of the RTP stream between the first monitor and the second monitor is obtained through comparison and calculation, thereby measuring the QoS between the network segments (for example, the firs monitor and the second monitor).

For ease of the understanding of persons skilled in the art, the description is given with the embodiments.

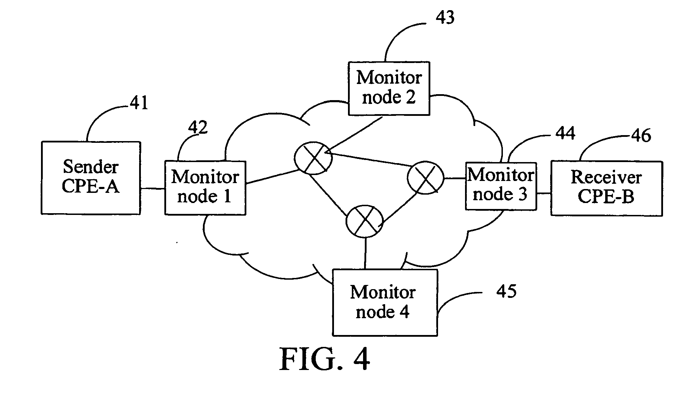

Referring to FIG 4, an application scenario of measuring QoS among network segments according to an embodiment of the present invention is shown. In this embodiment, for example, four monitors belonging to the same SP domain are pre-set among the network segments, and a data stream passes through a monitor (Monitor 1) and a monitor (Monitor 3). As shown in FIG. 4, a sender CPE-A 41, a monitor (Monitor 1) 42, a monitor (Monitor 2) 43, a monitor (Monitor 3) 44, a monitor (Monitor 4) 45, and a receiver CPE-B 46 exist, and the particular procedure is described in the following.

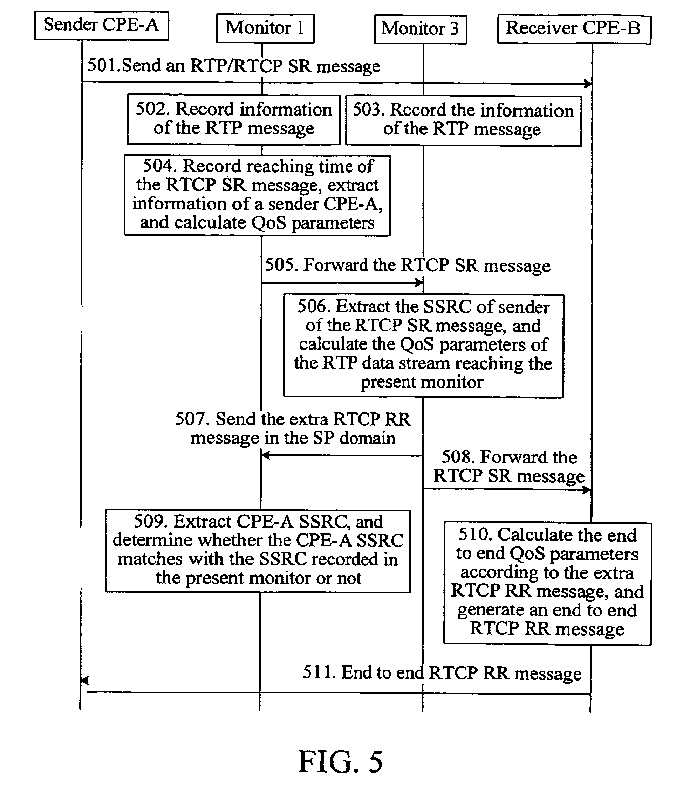

The sender CPE-A 41 sends an RTP/RTCP SR message to the receiver CPE-B 46. According to the protocol, the RTP message is continuously sent, and the RTCP SR message is periodically sent with a sending period of 5 seconds or 6 seconds, and the RTP message and the RTCP SR message may be multiplexed and delivered in a transmission layer. When the RTP/RTCP SR message passes through the two monitors, namely, Monitor 1 and Monitor 3, of the SP domain, the monitors on different positions may execute different operations to realize the measurement over the network segments. The particular processing procedure of the monitors may be obtained with reference to FIG 5. During the measuring procedure, if two monitors are set in the SP domain, the RTCP RR message is sent in a multicast or unicast manner; and if at least two monitors are set in the SP domain, the RTCP RR message is sent in the unicast manner.

If the extra RTCP RR message is sent in the multicast manner, a set multicast IP address and a set multicast port number are pre-notified when the monitors are configured. If the extra RTCP RR message is sent in the unicast manner, an IP address and a port number of the first monitor are pre-notified when the second monitor is configured.

Referring to FIG. 5, a flow chart of an associated measurement over the RTP/RTCP by the monitors according to an embodiment of the present invention is shown. In this embodiment, the monitors belonging to the same SP need to be added to the same multicast group, and the RTCP protocol in the SP domain occupies the same port number, the second monitor returns the extra RTCP RR message as a feedback in the multicast and/or the unicast manner in the SP domain. In this embodiment, the sender CPE-A sends the RTP/RTCP SR data stream to the receiver CPE-B, and the data stream passes through the two monitors, namely, Monitor I and Monitor 3, in the SP domain. The two monitors are respectively corresponding to an inlet and an outlet of the RTP service. The particularly procedure includes the following steps.

In step 501, the sender CPE-A sends the RTP/RTCP SR message.

In step 502 and step 503, the number of the RTP messages is recorded. That is, when Monitor 1 and Monitor 3 successively receive the RTP message, the operations of the two monitors are the same, and the monitors are triggered to perform the counting and the calculation, to extract the SN in the RTP message for calculating the fraction lost, and to extract the timestamp for calculating the transmission delay and the delay jitter.

In step 504 (which may be performed together with step 503), when receiving the RTCP SR message corresponding to the RTP data stream, Monitor 1 records a reaching time A1 of the RTCP SR message, and extracts the sender information in a header domain of the RTCP SR message. The sender information includes the SSRC of sender and the packet count, or the SSRC of sender, the NTP timestamp, and the packet count. According to the packet count, Monitor 1 calculates the QoS parameter information of the RTP data stream reaching the present monitor between the two RTCP SR messages, where the QoS parameter information includes a fraction lost Frac1, a cumulative number of packets lost Cul_num1 from the beginning of the sending until now, and a delay jitter J1, and calculation formulas are respectively given in the following.

Fraction lost Frac1=Number of packets lost in the interval lost_interval/Expected receiving message count in the interval Expected_interval

Cumulative number of packets lost Cul_num1=Expected value Expected-Actual value Received

J1(i) = J1(i-1) + (|D(i-1,i)| - J1(i-1))/16, i represents an i^{th} RTCP SR message received by the monitor, and D represents a delay difference value of the successive two messages reaching the monitor.

Then, according to the calculated delay jitter J1, the QoS information is stored by using the SSRC of the CPE-A as an index, or using the SSRC of the CPE-A and the NTP timestamp LSR as the indices.

In step 505, Monitor 1 continuously forwards the end to end RTCP SR message.

In step 506, when receiving the corresponding RTCP SR message, Monitor 3 extracts the SSRC of sender of the RTCP SR message, calculates the QoS parameters of the RTP data stream reaching the present monitor. The calculating procedure is similar to step 504, that is, Monitor 3 records a reaching time A2 of the RTCP SR message, and extracts the sender information in the header domain of the RTCP SR message. The sender information includes the SSRC of sender and the packet count, or the SSRC of sender, the NTP timestamp, and the packet count. Further, according to the time of the packet count, the QoS parameter information of the RTP data stream reaching the present monitor between the two RTCP SR messages is calculated, the information includes a fraction lost Frac2, a cumulative number of packets lost Cul_num2 from the beginning of the sending until now, and a delay jitter J2. The calculation formulas may be obtained with reference to the above description, and it is not described in detail here. After the QoS parameter information of the RTP data stream reaching the present monitor is already calculated, the RTP and the RTCP SR messages are normally forwarded, and an extra RTCP RR message is generated or constructed, where the extra RTCP RR message includes the SSRC of sender, the QoS parameters calculated by the present monitor, the NTP timestamp when the sender generates the RTCP SR message LSR, and the time spent for generating the extra message. That is to say, CPE-A SSRC is filled in the SSRC of sender in the receipt report of the extra RTCP RR message, which represents that the QoS of the RTP message sent by the CPE-A is counted statistically. The NTP timestamp in the RTCP SR message is filled in the LSR in the receipt report, which represents that the extra RTCP RR message is directed to the RTCP SR message.

In step 507, the extra RTCP RR message is sent in the SP domain in a multicast manner or a direct unicast manner. In this embodiment, Monitor 3 sends the extra RTCP RR message to Monitor 1 in the multicast manner or the direct unicast manner. If the multicast manner is adopted, the multicast IP address and the multicast port number are determined by the SP domain, and are pre-notified when the monitor is configured. If the unicast manner is adopted, the IP address and the detecting port number of the first monitor, Monitor 1, need to be delivered when the second monitor, Monitor 3, is configured.

In step 508, Monitor 3 continuously forwards the end to end RTCP SR message.

In step 509, when receiving the extra RTCP RR message sent by Monitor 3, other monitors in the SP domain extract the CPE-A SSRC in the receipt report in the extra RTCP RR message, and determine whether the CPE-A SSRC matches with the SSRC recorded in the present monitor. If yes, the monitor having the matching SSRC processes the extra RTCP RR message is processed, and other monitors drop the extra RTCP RR message. Then, the LSR field in the message is extracted, and the stored NTP timestamp is matched through the LSR, so as to find the corresponding QoS parameters. In this embodiment, only Monitor 1 matches with the SSRC in the extra RTCP RR message.

In this embodiment, when receiving the extra RTCP RR message, Monitor 1 records the reaching time A3 of the extra RTCP RR message, extracts the QoS parameters in the extra RTCP RR message, and compares the QoS parameters with the QoS performance parameters calculated and stored in the present monitor, so as to calculate the QoS transmission performance of the RTP message in the network layer between Monitor 1 and Monitor 3, where the QoS transmission performance includes the fraction lost (Frac2-Frac1), the cumulative number of packets lost (Cul_num2- Cul_num1), the delay jitter (J2-J1), and the RTT (A3-A1-DLSR) in the RTCP sending period.

In step 510, when receiving the RTCP SR message forwarded by Monitor 3, the receiver CPE-B calculates the end to end QoS parameters and generates the end to end RTCP RR message, where steps 509 and the 510 do not have any time precedence order.

In step 511, the receiver CPE-B returns the end to end RTCP RR message to the sender CPE-A as a feedback.

In addition, a plurality of monitors may be set between the sender CPE and the receiver CPE, and preferably, the second monitor sends the extra RTCP RR message in the unicast manner, or in the multicast manner.

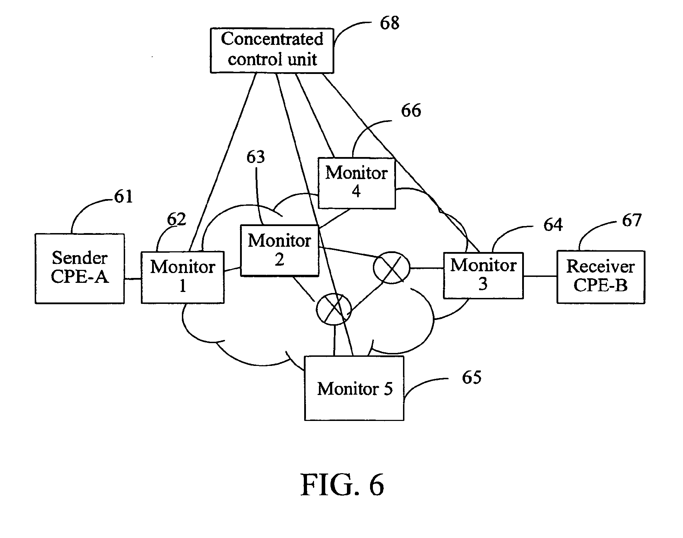

For ease of understanding, referring to FIG 6, another application scenario of measuring the QoS among the network segments according to an embodiment of the present invention is shown. A sender CPE-A 61, a monitor (Monitor 1) 62, a monitor (Monitor 2) 63, a monitor (Monitor 3) 64, a monitor (Monitor 4) 65, a monitor (Monitor 5) 66, a receiver CPE-B 67, and a concentrated control unit 68 exist. The particular procedure is similar to that of FIG 4, except that the RTP data stream passes through three monitors, that is, Monitor 1, Monitor 2, and Monitor 3, or more in the same SP domain. When forwarding the RTCP SR message, the second monitor (for example, Monitor 3) generates the extra RTCP RR message and sends the extra RTCP RR message to the first monitor (for example, Monitor 2) in the unicast manner or the multicast manner, and in this embodiment, the unicast manner is preferred to prevent the repeated calculation among the monitors. That is to say, before the second monitor sends the extra RTCP RR message in the unicast manner, the second monitor may know the position (IP address) of the first monitor in advance through the method for configuring the monitor by the concentrated control unit. A universal method is given in the following.

After being powered up, the monitor registers to a control plane, and the control plane saves the existing network topology information. When one RTP stream needs to be measured, the control plane determines whether the passing-through path matches with the monitors or not, so as to find the passing-through monitors and the precedence order. Then, the monitor is configured to start the measurement on the stream, and second monitor is notified of the information of the first monitor, so that the second monitor returns the extra RTCP RR message as a feedback.

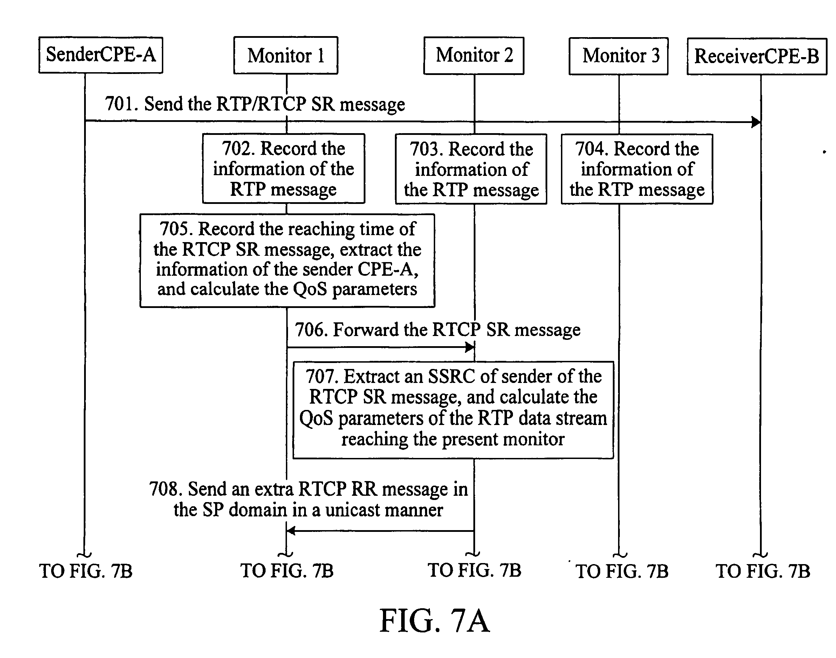

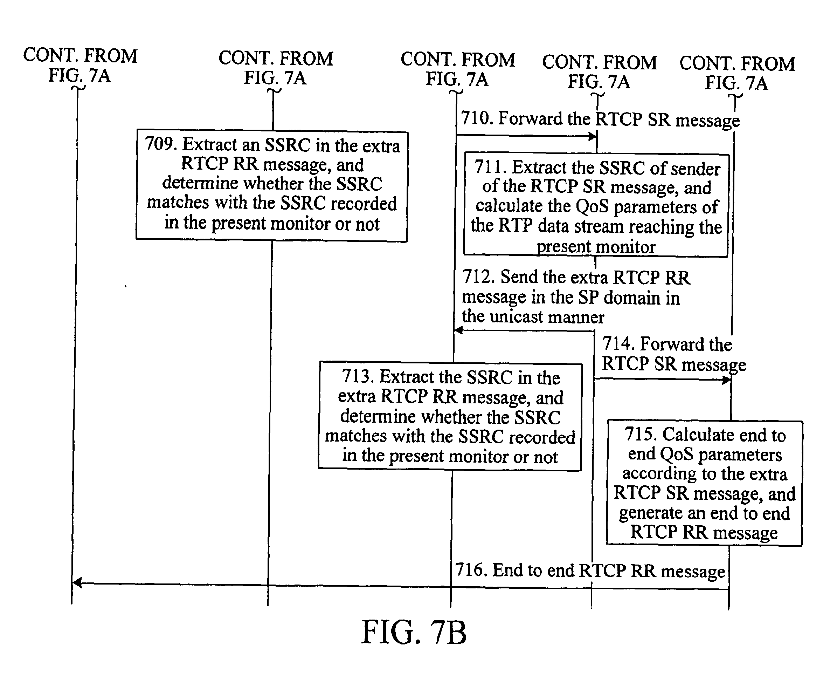

Referring to FIG. 7, another flow chart of the associated measurement over the RTP/RTCP by the monitors according to an embodiment of the present invention is shown. In this embodiment, for example, the RTP/RTCP SR message passes through the three monitors set in the SP domain, that is, Monitor 1, Monitor 2, and Monitor 3. When the QoS performance of one RTP stream in a certain network segment needs to be measured, a control entity pre-set the monitors in the network segment in the SP domain, the IP address of the first monitor is notified when the second monitor is configured, and two monitors among the three monitors are respectively corresponding to an inlet and an outlet of the RTP service. The implementation procedure is similar to that of FIG. 4, except that the extra RTCP RR message is sent in the unicast manner. The particular implementation steps are given in the following.

In step 701, the sender CPE-A sends the RTP/RTCP SR message.

In step 702, step 703, and step 704, when Monitor 1, Monitor 2, and Monitor 3 successively receive the RTP message, the operations of the three monitors are the same, and the monitors are triggered to perform the counting and the calculation.

In step 705 (which may be performed together with step 703 and step 704), when receiving the RTCP SR message corresponding to the RTP data stream, Monitor 1 records the reaching time A 1 of the RTCP SR message, and extracts the sender information in the header domain of the RTCP SR message. The sender information includes the SSRC of sender and the packet count, or the SSRC of sender, the NTP timestamp, and the packet count. The Monitor 1 calculates the QoS parameter information of the RTP data stream reaching the present monitor, where the QoS parameter information includes the fraction lost Frac1, the cumulative number of packets lost Cul_num1 from the beginning of the sending until now, and a delay jitter J1. T he calculation formulas may be obtained with reference to the above description, and are not described in detail here. The QoS information is stored by using the CPE-A SSRC as an index, or using the CPE-A SSRC and the NTP timestamp as the indices.

In step 706, Monitor 1 continuously forwards the end to end RTCP SR message.

In step 707, being similar to the step 506, when receiving the corresponding RTCP SR message, Monitor 2 records the reaching time A2 of the RTCP SR message, extracts the sender information in the RTCP SR message, where the sender information includes the SSRC of sender and the packet count, or the SSRC of sender, the packet count, and the NTP timestamp, calculates the QoS parameters of the RTP data stream reaching the present monitor, where the QoS parameters include the fraction lost Frac2, the cumulative number of packets lost Cul_num2, and the delay jitter J2. The calculating procedure is similar to step 506, so it is not described in detail here.

After the QoS parameter information of the RTP data stream reaching the present monitor is already calculated, the RTP and the RTCP SR messages are normally forwarded, and an extra RTCP RR message is generated or constructed, where the extra RTCP RR message includes the SSRC of sender, the QoS parameters calculated by the present monitor, the NTP timestamp when the sender generates the RTCP SR message LSR, and the time spent for generating the extra message. That is to say, CPE-A SSRC is filled in the SSRC of sender in the receipt report of the extra RTCP RR message, which represents that the QoS of the RTP message sent by the CPE-A is counted statistically. The NTP timestamp in the RTCP SR message is filled in the LSR in the receipt report, which represents that the extra RTCP RR message is directed to the RTCP SR message.

Step 708 is similar to step 507, except that the extra RTCP RR message may be sent in the SP domain in the unicast manner. That is to say, Monitor 2 sends the extra RTCP RR message to Monitor 1 in the direct unicast manner. The unicast IP address and the unicast port number of Monitor 1 are notified when the second monitor, Monitor 2, is configured.

In step 709, being similar to step 509, when receiving the extra RTCP RR message sent by Monitor 2 in the direct unicast manner, Monitor 1 extracts the CPE-A SSRC of the receipt report and the NTP timestamp LSR when the CPE-A generates the RTCP SR message in the extra RTCP RR message, and determines whether the CPE-A SSRC matches with the SSRC recorded in the present monitor. If yes, Monitor 1 processes the extra RTCP RR message.

That is to say, Monitor 1 records the reaching time A3 of the extra RTCP RR message, extracts the QoS parameters in the extra RTCP RR message, and compares the QoS parameters with the QoS performance parameters calculated and stored in the present monitor, so as to calculate the QoS transmission performance of the RTP message in the network layer between Monitor 1 and Monitor 2. The QoS transmission performance includes the fraction lost (Frac2-Frac1), the cumulative number of packets lost (Cul_num2-Cul_num1), the delay jitter (J2-J1), and the RTT (A3-A1-DLSR) in the RTCP sending period.

In step 710, Monitor 2 forwards the RTCP SR message.

In step 711, being similar to step 506, when receiving the corresponding RTCP SR message, Monitor 3 records the reaching time A4 of the RTCP SR message, extracts the SSRC of sender and the packet count of the RTCP SR message, or the SSRC of sender, the packet count, and the NTP timestamp, and calculates the QoS parameters of the RTP data stream reaching the present monitor, where the QoS parameters include the fraction lost Frac3, the cumulative number of packets lost Cul_num3, and the delay jitter J3. The calculating procedure is similar to step 506, so it is not described in detail here.

After the QoS parameter information of the RTP data stream reaching the present monitor is already calculated, the RTP and the RTCP SR messages are normally forwarded, and an extra RTCP RR message is generated or constructed, where the extra RTCP RR message includes the SSRC of sender, the QoS parameters calculated by the present monitor, the NTP timestamp when the sender generates the RTCP SR message LSR, and the time spent for generating the extra message DLSR. That is to say, CPE-A SSRC is filled in the SSRC of sender in the receipt report of the extra RTCP RR message, which represents that the QoS of the RTP message sent by the CPE-A is counted statistically. The NTP timestamp in the RTCP SR message is filled in the LSR in the receipt report, which represents that the extra RTCP RR message is directed to the RTCP SR message.

It should be noted that steps 708 and 709 and steps 710 and 711 do not have any time precedence order.

Step 712 is similar to step 507, except that the extra RTCP RR message is sent in the SP domain in the unicast manner. That is to say, Monitor 3 directly sends the extra RTCP RR message to Monitor 2 in the unicast manner. The unicast IP address and the unicast port number of Monitor 2 are notified when the second monitor, Monitor 3, is configured.

In step 713, being similar to step 509, when receiving the extra RTCP RR message sent by Monitor 3 in the direct unicast manner, Monitor 2 extracts the CPE-A SSRC in the receipt report in the extra RTCP RR message, or the CPE-A SSRC and the NTP timestamp LSR when the sender generates the RTCP SR message in the receipt report in the extra RTCP RR message, and determines whether the CPE-A SSRC, or the CPE-A SSRC and the LSR respectively match with that recorded in the present monitor. If yes, Monitor 2 processes the extra RTCP RR message.

That is to say, Monitor 2 records the reaching time A5 of the extra RTCP RR message, extracts the QoS parameters in the extra RTCP RR message, and compares the QoS parameters with the QoS performance parameters calculated and stored in the monitor, so as to calculate the QoS transmission performance of the RTP message in the network layer between Monitor 2 and Monitor 3, where the QoS transmission performance includes the fraction lost (Frac3-Frac2), the cumulative number of packets lost (Cul_num3- Cul_num2), the delay jitter (J3-J2), and the RTT (A5-A2-DLSR) in the RTCP sending period.

In step 714, Monitor 3 forwards the RTCP SR message.

In step 715, after receiving the extra RTCP SR message forwarded by Monitor 3, the receiver CPE-B calculates the end to end QoS parameters, and generates the end to end RTCP RR message.

It should be noted that steps 712 and 713 and steps 714 and 715 do not have any time precedence order.

In step 716, the receiver CPE-B returns the RTCP RR message to the sender CPE-A as a feedback.

It may be known from the technical solutions of FIGs. 5 and 7 that the numbers of the set monitors are different, and the manners of sending the generated extra RTCP SR message are different. In consideration of the optimized solution, if two monitors are set in the SP domain, the extra RTCP SR message may be sent in the unicast or the multicast manner. If three or more monitors are set, the extra RTCP SR message is sent in the unicast manner.

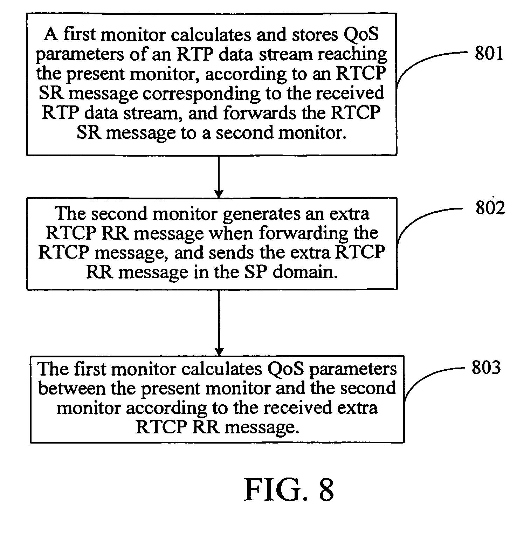

In addition, in an embodiment, the present invention further provides a method for measuring QoS. Referring to FIG 8, a flow chart of the method is shown. The method includes the following steps.

In step 801, a first monitor calculates and stores QoS parameters of an RTP data stream reaching the present monitor, according to an RTCP SR message corresponding to the received RTP data stream, and forwards the RTCP SR message to a second monitor.

In step 802, the second monitor generates an extra RTCP RR message when forwarding the RTCP SR message, and sends the extra RTCP RR message in an SP domain.

In step 803, the first monitor calculates QoS parameters between the present monitor and the second monitor according to the received extra RTCP RR message.

In the particular procedure of this embodiment, when receiving the RTCP SR message corresponding to the RTP data stream, the first monitor extracts sender information in the corresponding RTCP SR message, where the sender information includes an SS RC of sender and a packet count, or the SSRC of sender, an NTP timestamp, and the packet count, calculates the QoS parameters of the RTP data stream reaching the present monitor, and stores the QoS parameters of the RTP data stream reaching the present monitor by using the SSRC of sender and the packet count as indices, or using the SSRC of sender, the NTP timestamp, and the packet count as indices. Then, the first monitor forwards the RTCP SR message to the second monitor.

When receiving the RTCP SR message, the second monitor similarly calculates and stores the QoS parameters of the RTP data stream reaching the present monitor, where the QoS parameters include a fraction lost and a cumulative number of packets lost, and then generates the extra RTCP RR message when forwarding the RTCP SR message, and sends the extra RTCP RR message in the SP domain. The extra RTCP RR message includes an SSRC of sender, QoS parameters calculated by the present monitor, an NTP timestamp when the sender generates the RTCP SR message LSR, and a time spent for generating the extra RTCP RR message DLSR.

The extra RTCP RR message is sent in the SP domain in the multicast manner or the unicast manner. If two monitors are set, the multicast manner or the unicast manner is adopted. If three or more monitors are set, preferably the unicast manner is adopted.

When receiving the extra RTCP RR message, the first monitor extracts the sender information in the extra RTCP RR message, and determines whether the sender information in the extra RTCP RR message matches with sender information stored in the present monitor. If yes, the first monitor extracts one stored QoS parameter corresponding to the SSRC of sender, and compares the QoS parameter with the QoS parameters in the extra RTCP RR message, thereby obtaining the QoS parameters between the monitors.

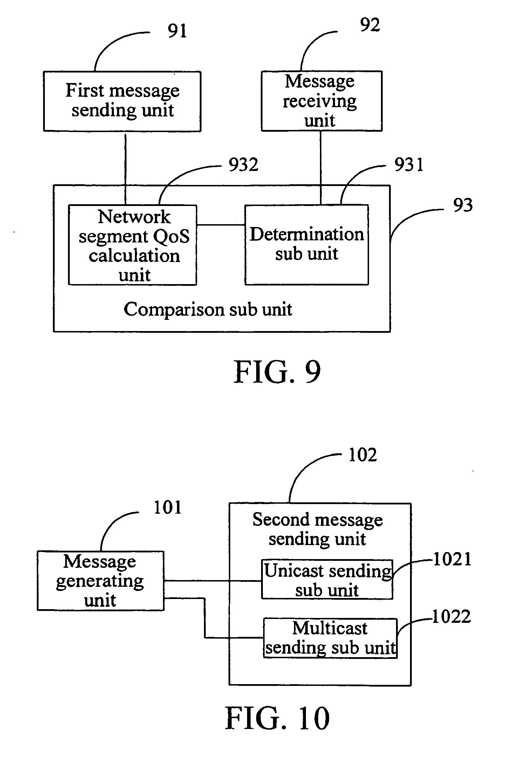

In addition, in an embodiment, the present invention further provides a network device. Referring to FIG 9, a schematic structural view of the network device is shown. The network device includes a first message sending unit 91, a message receiving unit 92, and a network segment QoS calculation unit 93. The first message sending unit 91 is configured to send a received RTCP SR message to a second monitor. The message receiving unit 92 is configured to receive an extra RTCP RR message sent by the second monitor. The network segment QoS calculation unit 93 is configured to calculate QoS parameters between the present monitor and the second monitor according to the extra RTCP RR message.

Preferably, the network device further includes a first QoS calculation unit and a first storage unit. The first QoS calculation unit is configured to extract an SSRC of sender and a packet count in the RTCP SR message corresponding to a received RTP data stream; or extract the SSRC of sender, an NTP timestamp, and the packet count; and calculate QoS parameters of the RTP data stream reaching the present monitor. That is to say, when receiving an RTP/RTCP SR message, the first QoS calculation unit firstly records an SN, a timestamp in the RTP message, and a time when the corresponding RTCP SR message reaches the present monitor, extracts sender information in a header domain of the RTCP SR message, where the sender information includes the SSRC of sender and the packet count, or the SSRC of sender, the NTP timestamp LSR, and the packet count. Then, according to the received SN and the timestamp of the RTP message, and the sender information in the RTCP SR message, the first QoS calculation unit calculates the QoS parameters of the RTP data stream reaching the present monitor between adjacent RTCP SR messages.

The first storage unit is configured to store the QoS parameters of the RTP data stream reaching the present monitor by using the SSRC of sender as an index, or using the SSRC of sender and the NTP timestamp as indices.

Preferably, the network segment QoS calculation unit 93 includes a determination sub unit 931 and a comparison sub unit 932. The determination sub unit 931 is configured to determine whether the SSRC of sender in the extra RTCP RR message, or the SSRC of sender and the NTP timestamp when the sender generates the RTCP SR message match with those recorded in the present monitor or not. The comparison sub unit 932 is configured to compare the QoS parameters in the extra RTCP RR message with the local QoS parameters, when receiving the determination result sent by the determination sub unit indicating matching, and obtain the QoS between the monitors.

In addition, in an embodiment, the present invention further provides a network device. Referring to FIG 10, a schematic structural view of the network device is shown. The network device includes a message generating unit 101 and a second message sending unit 102. The message generating unit 101 is configured to generate an extra RTCP RR message when forwarding a received RTCP SR message, where the extra RTCP RR message includes an SSRC of sender, QoS parameters calculated by the present monitor, and an NTP timestamp when a sender generates the RTCP SR message. The second message sending unit 102 is configured to send the extra RTCP RR message in an SP domain, for calculating QoS between monitors.

Preferably, the network device further includes a second QoS calculation unit and a second storage unit. The second QoS calculation unit is configured to extract the SSRC of sender and a packet count of the RTCP SR message when receiving the RTCP SR message corresponding to a received RTP data stream; or extract the SSRC of sender, the NTP timestamp, and the packet count, calculate and store QoS parameters of the RTP data stream reaching the present monitor, and forward the RTCP SR message. The second storage unit is configured to store the QoS parameters of the present monitor by using the SSRC of sender as an index, or using the SSRC of sender and the NTP timestamp as indices.

Preferably, the second message sending unit 102 at least includes a unicast sending sub unit 1021 or a multicast sending sub unit 1022. The unicast sending sub unit 1021 is configured to send the extra RTCP RR message when at least two monitors are set in the SP domain. The multicast sending sub unit 1022 is configured to send the extra RTCP RR message when two monitors are set in the SP domain.

Preferably, the network device further includes a concentrated control unit, which is configured to control a manner of sending the extra RTCP RR message, and pre-notify a set multicast IP address and a set multicast port number when the monitor is configured, if the extra RTCP RR message is sent in a multicast manner; or pre-notify an IP address and a port number of a first monitor when a second monitor is configured, if the extra RTCP RR message is sent in a unicast manner

It should be noted that when the network device as shown in FIGs. 9 and 10 includes the first QoS calculation unit, the message receiving unit, and the network segment QoS calculation unit, the network device is the first monitor on a path through which the RTP stream passes in the SP domain.

When the network device includes the first QoS calculation unit, the message generating unit, the message sending unit, the message receiving unit, and the network segment QoS calculation unit, the network device is an intermediate monitor on the path through which the RTP stream passes in the SP domain.

When the network device includes the second QoS calculation unit, the message generating unit, and the message sending unit, the network device is the last monitor on the path through which the RTP stream passes in the SP domain.

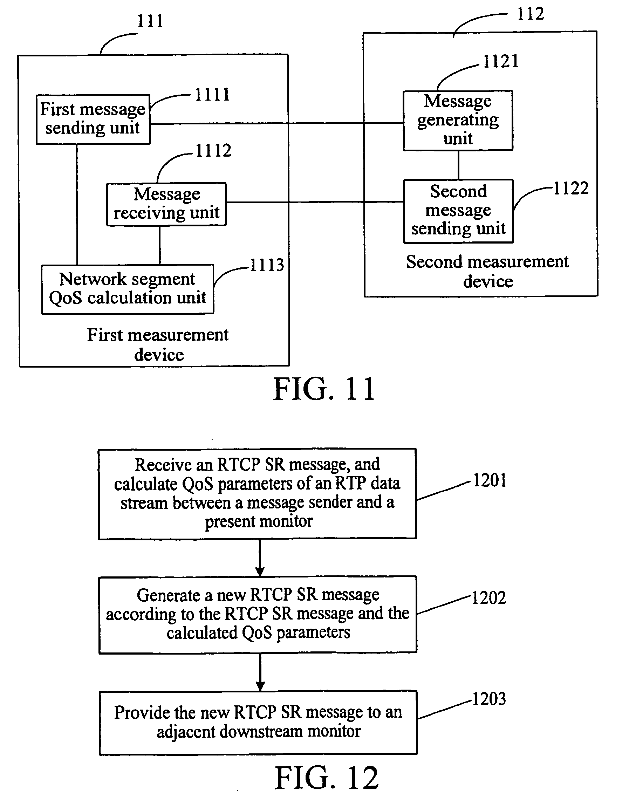

In addition, in an embodiment, the present invention further provides a network system. Referring to FIG 11, a schematic structural view of the network system is shown. The system includes a first network device 111 and a second network device 112. The first network device 111 includes a first message sending unit 1111, a message receiving unit 1112, and a network segment QoS calculation unit 1113. The first message sending unit 1111 is configured to send a received RTCP SR message to a second monitor. The message receiving unit 1112 is configured to receive an extra RTCP RR message sent by the second monitor. The network segment QoS calculation unit 1113 is configured to calculate QoS parameters between the present monitor and the second monitor according to the extra RTCP RR message.

The second network device 112 includes a message generating unit 1121 and a second message sending unit 1122. The message generating unit 1121 is configured to generate an extra RTCP RR message when forwarding the received RTCP SR message, where the extra RTCP RR message includes an SSRC of sender, QoS parameters calculated by the present monitor, and an NTP timestamp when a sender generates the RTCP SR message. The second message sending unit 1122 is configured to send the extra RTCP RR message in an SP domain, for calculating QoS between monitors.

Preferably, the network device further includes a first QoS calculation unit and a first storage unit. The second network device includes a second QoS calculation unit and a second storage unit. The first or the second QoS calculation unit is configured to extract the SSRC of sender and the packet count of the RTCP SR message, when receiving the RTCP SR message corresponding to the RTP data stream, or extract the SSRC of sender, the NTP timestamp, and the packet count, calculate and store the QoS parameters of the RTP data stream reaching the present monitor, and forward the RTCP SR message. The first or the second storage unit is configured to store the QoS parameters of the present monitor by using the SSRC of sender as an index, or using the SSRC of sender and the NTP timestamp as indices.

In this embodiment, the particular implementation procedure is given in the following.

Information of a certain determined RTP data stream reaching the present monitor is monitored, when the RTCP SR message corresponding to the RTP data stream reaches the first QoS calculation unit, the first QoS calculation unit extracts the SSRC of sender and the packet count of the RTCP SR message, or the SSRC of sender, the packet count, and the NTP timestamp of the RTCP SR message, calculates and stores the QoS parameters of the RTP data stream reaching the present monitor, where the QoS parameters include a fraction lost, an accumulated fraction lost, and a delay jitter. Then, the first message sending unit forwards the RTCP SR message to the second QoS calculation unit. The procedure for calculating the QoS parameters by the second QoS calculation unit is similar to that of the first QoS calculation unit, that is, according to the received RTCP SR message, the second QoS calculation unit calculates the QoS parameters of the RTP data stream reaching the present monitor, and forwards the RTCP SR message to the message generating unit. When forwarding the received RTCP SR message, the message generating unit generates the extra RTCP RR message, where the extra RTCP RR message includes an SSRC of sender, QoS parameters of the present monitor, an NTP timestamp when the sender generates the RTCP SR message, and a time spent for generating the extra RTCP RR message, and forwards the extra RTCP RR message to the second message sending unit. The second message sending unit sends the RTCP RR message to the message receiving unit in a multicast manner or a unicast manner. After receiving the extra RTCP RR message, the message receiving unit forwards the extra RTCP RR message to the network segment QoS calculation unit. The network segment QoS calculation unit 83 calculates the QoS parameters between the first monitor and the second monitor according to the extra RTCP RR message. The particular implementation procedure may be obtained with reference to the particular implementation procedure of the foregoing method, and it is not described in detail here.

Accordingly, in the embodiment of the present invention, the extra RTCP RR message returned by the second monitor as a feedback may be sent in the multicast manner in the SP domain, for calculating the QoS parameters between the monitors. The information required by the encapsulation of the transmission layer and the network layer is known. The monitor needs not to know the IP address or the port information of the first monitor through which the RTP/RTCP SR message passes, thereby simplifying the configuration preparation works before the measurement, and also simplifying the control on the monitor. For example, when one monitor needs to be added, the monitor is only notified of the multicast address of the monitor in the SP and the port number occupied by the RTCP in the domain, so as to monitor the RTP message, thus facilitating the extension of the monitor.

When an RTT is calculated on the first monitor, at least a single side path is the same as the RTP message, and an accuracy of a time delay is higher than that in the active measurement. When storing and forwarding the end to end RTP/RTCP message, the monitor only needs to generate the extra RTCP RR message, and directly sends the message in the multicast manner or the unicast manner in the SP domain, thereby simplifying the demands of processing the extra RTCP message by the monitor, as compared with the active measurement.

The second monitor returns the QoS information to the first monitor, the first monitor calculates the QoS performance of the RTP message in the network between the two monitors according to a receipt report, so that the monitor realizes the measurement over the network segment, thereby reducing a calculation working amount of a concentrated control entity.

In addition, through the technical solution of the embodiment of the present invention, a routine inspect may be performed on the RTP data stream. If a certain monitor fails, the monitor may be approximately positioned through the solution. When the end to end RTP service passes through a certain SP, the SP configures the monitors monitoring the RTP service to distribute on edges of the domain, that is, the places where the RTP message enters the domain and leaves the domain. Instead, no m onitors or few monitors are distributed on the path through which the RTP service passes in the domain. In the embodiment of the present invention, the monitors are set on an inlet and an outlet of the RTP service domain, so as to measure the extra RTCP RR message interacted between the monitors, thereby firstly determining the quality situation of the RTP service in the SP domain. If the quality descends, the problem may be positioned more accurately according to other methods.

In addition, in an embodiment, the present invention further provides method for forwarding an RTCP SR message. Referring to FIG. 12, a flow chart of a method for forwarding an RTCP SR message is shown. The forwarding method includes the following steps.

In step 1201, the RTCP SR message is received, and QoS parameters of the RTP data stream between a message sender and a present monitor are calculated.

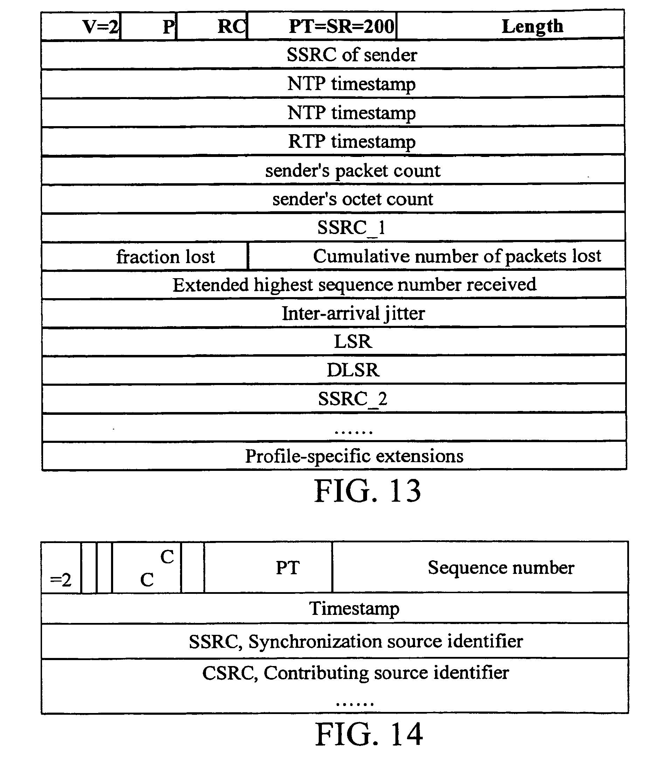

A format of the RTCP SR message is as shown in FIG 13, where V represents a version, P represents whether a filling position is valid or not, RC represents a number of receipt reports, PT represents a packet type, SR represents a sender report, and Length represents a length of the message. The RTCP SR message includes four parts, which are respectively, a header of 8 bytes, sending information of 20 bytes, a plurality of RRBs in a unit of 24 bytes, and an extended part if necessary. As shown in FIG. 13, from an SSRC I field to a DLSR field is one RRB.

The RTCP SR message may be received by the monitor located on the adjacent downstream of the message sender. Here, the RTCP SR message is send by the message sender and is not forwarded or processed by any monitor. The RTCP SR message may also be received by the monitor located on the message sender downstream instead of the adjacent downstream. Here, the RTCP SR message is sent by the adjacent upstream monitor, or is sent by the message sender and is processed by the adjacent upstream monitor, or is a new RTCP SR message generated by the adjacent upstream monitor.

In the actual application, the message sender or the adjacent upstream monitor sends the RTCP SR message at intervals, or further periodically sends the RTCP SR message, for example, sends one RTCP SR message at every 5 seconds. Definitely, the RTCP SR is received at intervals, or further periodically.

Before receiving the RTCP SR message, each monitor receives at least one RTP message, the RTP message may be continuously sent by the message sender, so as to form the RTP stream, and the RTCP SR message and the RTP message may be multiplexed and transmitted in the transmission layer. The format of the RTP message is as shown in FIG. 14, where X represents whether an extended header exists or not, CCs represents a number of contributing source identifiers (CSRCs), M is a mark, and PT represents a load type.

After receiving the RTP message, the monitor extracts an SN in the RTP message, for calculating a fraction lost; and extracts a timestamp, for calculating a transmission delay and a delay jitter. After the RTCP SR message is received, no matter the RTCP SR message is forwarded or processed by the upstream monitor, as long as the RTCP SR message has all the information of the RTCP SR message sent by the message sender, a time when the RTCP SR message reaches the present monitor is recorded. Further, according to the packet count in the RTCP SR message sent by the message sender, it is possible to calculate the fraction lost of the RTP data stream between the message sender and the present monitor in the time interval of the two adjacent RTCP SR messages reaching the present monitor, and the cumulative number of packets lost in the interval from the receiving of the first RTCP SR message sent by the message sender to the receiving of the current RTCP SR message sent by the message sender.

It should be noted that if the received RTCP SR message has all the information of the RTCP SR message sent by the message sender, the QoS parameters of the RTP data stream between the message sender and the present monitor can be calculated only after the RTCP SR packet is received. If the received RTCP SR message is the new message sent by the adjacent upstream monitor and independent of the RTCP SR message sent by the message sender, the procedure of receiving the RTCP SR message and the procedure of calculating the QoS parameters of the RTP data stream between the message sender and the present monitor do not have any time precedence order.

In step 1202, according to the RTCP SR message and the calculated QoS parameters, a new RTCP SR message is generated.

Particularly, the new RTCP SR message may be generated in the following manner. According to the calculated QoS parameters of the RTP data stream between the message sender and the present monitor, a receipt report is generated, and then the receipt report is put into an RRB of the RTCP SR message, so as to generate the new RTCP SR message. In the receipt report, the SSRC is the SSRC of the message sender, the timestamp (LSR) carried by the latest sender report is the time when the RTCP SR message reaches the present monitor, and the DLSR is the time spent for generating the received message.

If the RTCP SR message is sent by the message sender and is not forwarded or processed by any monitor, the generated receipt report is put into the RRB of the RTCP SR message, for example, is put after the existing RRBs in the RTCP SR message. Generally, as long as the number of the RRBs in the receive RTCP SR message is smaller than 31, the newly generated receipt report may be put after the existing RRBs in the RTCP SR message, where 1 is added to an RC field of the header domain, and 6 is added to the Length field.

If the RTCP SR message is sent by the adjacent upstream monitor and carries the QoS parameters of the RTP data stream between the message sender and the adjacent upstream monitor, the receipt report is put into the original positions of the QoS parameters of the RTP data stream between the message sender and the adjacent upstream monitor in the RTCP SR message. Definitely, the QoS parameters may exist in the RTCP SR message in the form of the receipt report. In other words, in the RTCP SR packet, the receipt report generated by the adjacent upstream monitor is replaced by the new receipt report. Similarly, if the received RTCP SR message is newly generated by the adjacent upstream monitor and independent of the RTCP SR message sent by the message sender, the receipt report generated by the adjacent upstream monitor is replaced by the new receipt report in the RTCP SR message.

In addition, the new RTCP SR message may be generated in the following manner. The receipt report is generated according to the calculated QoS parameters of the RTP data stream between the message sender and the present monitor, and then the new RTCP SR message independent of the RTCP SR message is generated according to the generated receipt report. Generally, if the number of the RRBs in the received RTCP SR message is equal to 31, a new message independent of the received RTCP SR message may be generated for the generated receipt report. Here, the SSRC in the header domain of the message is the identifier of the monitor, the RC is 1, the Length is the actual length of the new message, and other information is the same as the received RTCP SR message.

In step 1203, the new RTCP SR message is provided to the adjacent downstream monitor.

No matter to obtain the new RTCP SR message after modifying the received RTCP SR message or generate a new message independent of the received RTCP SR message, the new RTCP SR message may be provided to the adjacent downstream monitor. In this manner, the adjacent downstream monitor may calculate the QoS parameters of the RTP data stream between the monitor executing steps 1201, 1202, and 1203 and the present monitor, according to the QoS parameters of the RTP data stream between the message sender and the monitor executing steps 1201, 1202, and 1203 carried in the new RTCP SR message.

It should be noted that, in the embodiment as shown in FIG 12, if the RTCP SR message is sent by the adjacent upstream monitor, the RTCP SR message carries the QoS parameters of the RTP data stream between the message sender and the adjacent upstream monitor, receives the RTCP SR message, calculates the QoS parameters of the RTP data stream between the message sender and the present monitor, and calculates the QoS parameters of the RTP data stream between the adjacent upstream monitor and the present monitor according to the QoS parameters carried in the RTCP SR message and the calculated QoS parameters.

The embodiment of FIG 12 may be implemented by various forms of devices. An embodiment of one of the devices includes a message receiving unit, configured to receive an RTCP SR message; a QoS parameter calculation unit, configured to calculate QoS parameters of an RTP data stream corresponding to the RTCP SR message between a message sender and the present monitor; a new message generating unit, configured to generate a new RTCP SR message according to the RTCP SR message received by the message receiving unit and the QoS parameters calculated by the QoS parameter calculation unit; and a message providing unit, configured to provide the new RTCP SR message generated by the new message generating unit to an adjacent downstream monitor.

The RTCP SR message received by the message receiving unit may have all the information of the RTCP SR message sent by the message sender, or may be a new RTCP SR message generated by the adjacent upstream monitor.

The message receiving unit may also receive the RTP message. After receiving the RTP message, the message receiving unit provides the RTP message to another processing unit of the same device or monitor, and the other processing unit may extract an SN in the RTP message for calculating a fraction lost, and may extract a timestamp for calculating a transmission delay and a delay jitter. After the message receiving unit receives the RTCP SR message, no matter the RTCP SR message is forwarded or processed by the upstream monitor forward, the RTCP SR message may be provided to another processing unit as long as the RTCP SR message has all the information of the RTCP SR message sent by the message sender. The other processing unit records a time when the RTCP SR message reaches the present monitor, and calculates the fraction lost of the RTP data stream between the message sender and the present monitor in the time interval of the two adjacent RTCP SR messages reaching the present monitor, and the cumulative number of packets lost in the interval from the receiving of the first RTCP SR message sent by the message sender to the receiving of the current RTCP SR message sent by the message sender, according to the packet count recorded in the RTCP SR message sent by the message sender. Definitely, the other processing unit may be the QoS parameter calculation unit.

It should be noted that if the RTCP SR message received by the message receiving unit has all the information of the RTCP SR message sent by the message sender, the QoS parameter calculation unit can calculate the QoS parameters of the RTP data stream between the message sender and the present monitor only after receiving the RTCP SR packet. If the RTCP SR message received by the message receiving unit is the new message sent by the adjacent upstream monitor and independent of RTCP SR message sent by the message sender, the procedure of receiving the RTCP SR message by the message receiving unit and the procedure of calculating the QoS parameters of the RTP data stream between the message sender and the present monitor by the QoS parameter calculation unit do not have any time precedence order.

The new message generating unit may generate the new RTCP SR message in the following manner. The receipt report is generated according to the calculated QoS parameters of the RTP data stream between the message sender and the present monitor, the receipt report is put into the RRB of the RTCP SR message, and the new RTCP SR message is generated.

If the RTCP SR message is sent by the message sender and is not forwarded or processed by any monitor, the new message generating unit puts the generated receipt report into the RRB of the RTCP SR message, for example, puts the generated receipt report after the existing RRBs in the RTCP SR message.

If the RTCP SR message is sent by the adjacent upstream monitor and carries the QoS parameters of the RTP data stream between the message sender and the adjacent upstream monitor, the new message generating unit puts the receipt report into the original positions of the QoS parameters of the RTP data stream between the message sender and the adjacent upstream monitor in the RTCP SR message. Definitely, the QoS parameters may exist in the RTCP SR message in the form of the receipt report. In other words, in the RTCP SR message, the receipt report generated by the adjacent upstream monitor is replaced by the new receipt report. Similarly, if the received RTCP SR message is newly generated by the adjacent upstream monitor and independent of the RTCP SR message sent by the message sender, the new message generating unit may also replace the receipt report generated by the adjacent upstream monitor by the new receipt report in the RTCP SR message.

In addition, the new message generating unit may generate the new RTCP SR message in the following manner. The receipt report is generated according to the calculated QoS parameters of the RTP data stream between the message sender and the present monitor, and the new RTCP SR message independent of the RTCP SR message is generated according to the generated receipt report.

No matter the new message generating unit obtains the new RTCP SR message after modifying the received RTCP SR message or generates a new message independent of the received RTCP SR message, the new message generating unit provides the new RTCP SR message to the adjacent downstream monitor.

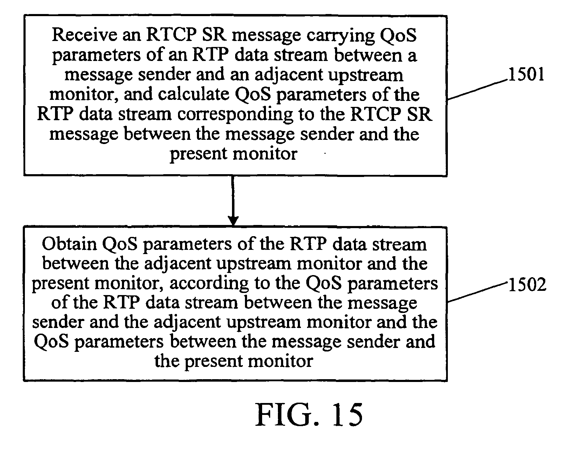

In the embodiment as shown in FIG 12, a monitor may provide the new RTCP SR to the adjacent downstream monitor, so that the adjacent downstream monitor may measure the QoS over the network segments according to the new RTCP SR message. Therefore, the present invention further provides a method for measuring QoS over RTP/RTCP. Referring to FIG 15, the method includes the following steps.

In step 1501, an RTCP SR message carrying QoS parameters of an RTP data stream between a message sender and an adjacent upstream monitor is received, and QoS parameters of the RTP data stream corresponding to the RTCP SR message between a message sender and the present monitor are calculated.

The RTCP SR message carrying the QoS parameters of the RTP data stream between the message sender and the adjacent upstream monitor may be sent by the adjacent upstream monitor, the received RTCP SR message may have all the information of the RTCP SR message sent by the message sender, and the received RTCP SR message may a new message generated by the adjacent upstream monitor and independent of the RTCP SR message sent by the message sender. The QoS parameters may exist in the received RTCP SR message in a form of a receipt report.

After the RTCP SR message having all the information of the RTCP SR message sent by the message sender is received, or the RTCP SR message sent by the message sender is received, the QoS parameters of the RTP data stream between the message sender and the present monitor may be calculated.

It should be noted that if the received RTCP SR message has all the information of the RTCP SR message sent by the message, the Qo S parameters of the RTP data stream between the message sender and the present monitor can be calculated only after the message is received. If the received RTCP SR message is generated by the adjacent upstream monitor and independent of the RTCP SR message sent by the message sender, the procedure of receiving the RTCP SR message carrying the QoS parameters of the RTP data stream between the message sender and the adjacent upstream monitor and the procedure of calculating the QoS parameters of the RTP data stream between the message sender and the present monitor do not have any time precedence order.

In step 1502, according to the QoS parameters of the RTP data stream between the message sender and the adjacent upstream monitor and the QoS parameters between the message sender and the present monitor, QoS parameters of the RTP data stream between the adjacent upstream monitor and the present monitor are obtained.

Distinctly, after step 1501, the QoS parameters of the RTP data stream between the message sender and the adjacent upstream monitor and the QoS parameters between the message sender and the present monitor are obtained. According to the two parameters, the QoS parameters of the RTP data stream between the adjacent upstream monitor and the present monitor may be obtained, thereby measuring the QoS over the network segments.

If the RTCP SR message is received by the monitor located on the message receiver upstream but not the adjacent upstream monitor, and the received RTCP SR message has all the information of the RTCP SR message sent by the message sender, after the QoS parameters of the RTP data stream between the message sender and the present monitor are calculated, the receipt report is generated according to the calculated QoS parameters of the RTP data stream between the message sender and the present monitor, and the receipt report is put into the original positions of the QoS parameters of the RTP data stream between the message sender and the adjacent upstream monitor in the received RTCP SR message. A new RTCP SR message is generated, and then the new RTCP SR message is provided to the adjacent downstream monitor.

It should be noted that in the embodiment as shown in FIG 15, if the RTCP SR message is received by the monitor located on the message receiver upstream but not the adjacent upstream monitor, and the received RTCP SR message has all the information of the RTCP SR message sent by the message sender, after the QoS parameters of the RTP data stream between the message sender and the present monitor are calculated, the receipt report is generated according to the calculated QoS parameters of the RTP data stream between the message sender and the present monitor, and the receipt report is put into the original positions of the QoS parameters of the RTP data stream between the message sender and the adjacent upstream monitor in the received RTCP SR message. A new RTCP SR message is generated, and then the new RTCP SR message is provided for the adjacent downstream monitor.

If the RTCP SR message is received by the monitor located on the message receiver upstream but not the adjacent upstream monitor, and the received RTCP SR message is independent of the RTCP SR message sent by the message sender, after QoS parameters of the RTP data stream between the message sender and the present monitor are calculated, the receipt report is generated according to the calculated QoS parameters of the RTP data stream between the message sender and the present monitor, and the new RTCP SR message independent of the RTCP SR message sent by the message sender is generated according to the generated receipt report, and then the new RTCP SR message is provided to the adjacent downstream monitor.

If the RTCP SR message is received by the adjacent upstream monitor of the message receiver, and the received RTCP SR message has all the information of the RTCP SR message sent by the message sender, after the RTCP SR message is received, the QoS parameters of the RTP data stream between the message sender and the adjacent upstream monitor carried in the received RTCP SR message may be removed, the received RTCP SR message is restored to the RTCP SR message sent by the message sender, and then the RTCP SR message sent by the message sender is provided to the message receiver.

If the RTCP SR message is received by the adjacent upstream monitor of the message receiver upstream, and the received RTCP SR message is independent of the RTCP SR message sent by the message sender, after the RTCP SR message is received, the received RTCP SR message may be removed, the new RTCP SR message is no longer generated, and the RTCP SR message sent by the message sender is provided to the message receiver.

In addition, in the actual application, the RTCP SR message may pass through different network domains provided by different Internet Service Providers (ISPs) to reach the message receiver from the message sender. For two adjacent network domains, the last monitor of the upstream network domain may not need to provide the QoS parameters of the RTP data stream between the two monitors to the downstream network domain, due to at least one reason that the downstream network domain may not support the modified format of the RTCP SR message made by the upstream network domain, or the QoS parameters of the RTP data stream between the two network domains need not to be measured, or the upstream network domain does not expect that the downstream network domain obtains the transmission performance of the RTP data stream in the upstream network domain, or other reasons.

Particularly, if the RTCP SR message is received by the last monitor of a network domain, and the received RTCP SR message has all the information of the RTCP SR message sent by the message sender, after the RTCP SR message is received, the QoS parameters of the RTP data stream between the message sender and the adjacent upstream monitor carried in the received RTCP SR message may be removed, the received RTCP SR message is restored to the RTCP SR message sent by the message sender, and then the RTCP SR message sent by the message sender is provided to the adjacent downstream network domain.

If the RTCP SR message is received by the last monitor of a network domain, and the received RTCP SR message is independent of the RTCP SR message sent by the message sender, after the RTCP SR message is received, the received RTCP SR message independent of the RTCP SR message sent by the message sender may be removed, the new RTCP SR message is no longer generated, and the RTCP SR message sent by the message sender is provided to the adjacent downstream network domain.

Definitely, if the downstream network domain supports the modified format of the RTCP SR message made by the upstream network domain, or the downstream network domain needs to measure QoS parameters of the RTP data stream between the two network domains, or due to other reasons, the last monitor of the upstream network domain may provide the generated receipt report to the downstream network domain.

The embodiment of FIG 15 may be implemented by various forms of devices. An embodiment of one of the devices includes a message receiving unit, configured to receive an RTCP SR message carrying QoS parameters of an RTP data stream between a message sender and an adjacent upstream monitor; a QoS parameter calculation unit, configured to calculate QoS parameters of the RTP data stream corresponding to the RTCP SR message between the message sender and the present monitor; a QoS parameter obtaining unit over network segments, configured to obtain QoS parameters of the RTP data stream between the adjacent upstream monitor and the present monitor, according to the QoS parameters of RTP data stream between the message sender and the adjacent upstream monitor received by the message receiving unit and the QoS parameters between the message sender and the present monitor calculated by the QoS parameter calculation unit.

The RTCP SR message carrying the QoS parameters of the RTP data stream between the message sender and the adjacent upstream monitor mat be sent by the adjacent upstream monitor, the RTCP SR message received by the message receiving unit may have all the information of the RTCP SR message sent by the message sender, and the received RTCP SR message may be a new message generated by the adjacent upstream monitor and independent of RTCP SR message sent by the message sender. The QoS parameters may exist in the received RTCP SR message in a form of the receipt report.

After the message receiving unit receives the RTCP SR message having all the information of the RTCP SR message sent by the message sender, or receives the RTCP SR message sent by the message sender, the QoS parameter calculation unit calculates the QoS parameters of the RTP data stream between the message sender and the present monitor.

It should be noted that if the RTCP SR message received by the message receiving unit has all the information of the RTCP SR message sent by the message sender, the QoS parameter calculation unit can calculate the QoS parameters of the RTP data stream between the message sender and the present monitor only after receiving the message. If the RTCP SR message received by the message receiving unit is generated by the adjacent upstream monitor and independent of the RTCP SR message sent by the message sender, the procedure of receiving the RTCP SR message carrying the QoS parameters of the RTP data stream between the message sender and the adjacent upstream monitor by the message receiving unit, and the procedure of calculating the QoS parameters of the RTP data stream between the message sender and the present monitor by the QoS parameter calculation unit do not have any time precedence order.

Distinctly, the message receiving unit may obtain the QoS parameters of the RTP data stream between the message sender and the adjacent upstream monitor, the QoS parameter calculation unit may calculate the QoS parameters of the RTP data stream between the message sender and the present monitor. According to the two parameters, the QoS parameter obtaining unit over network segments may calculate the QoS parameters of the RTP data stream between the adjacent upstream monitor and the present monitor.

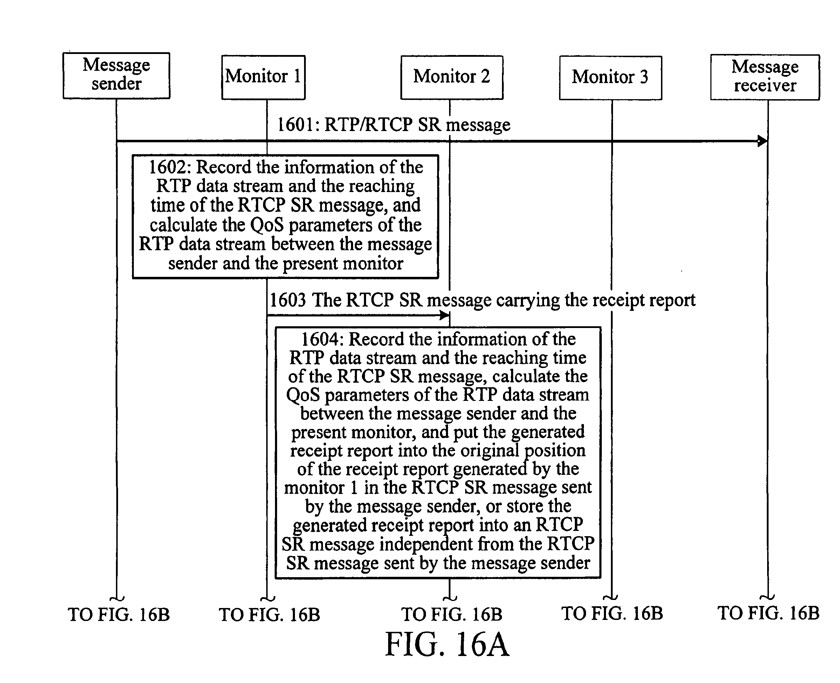

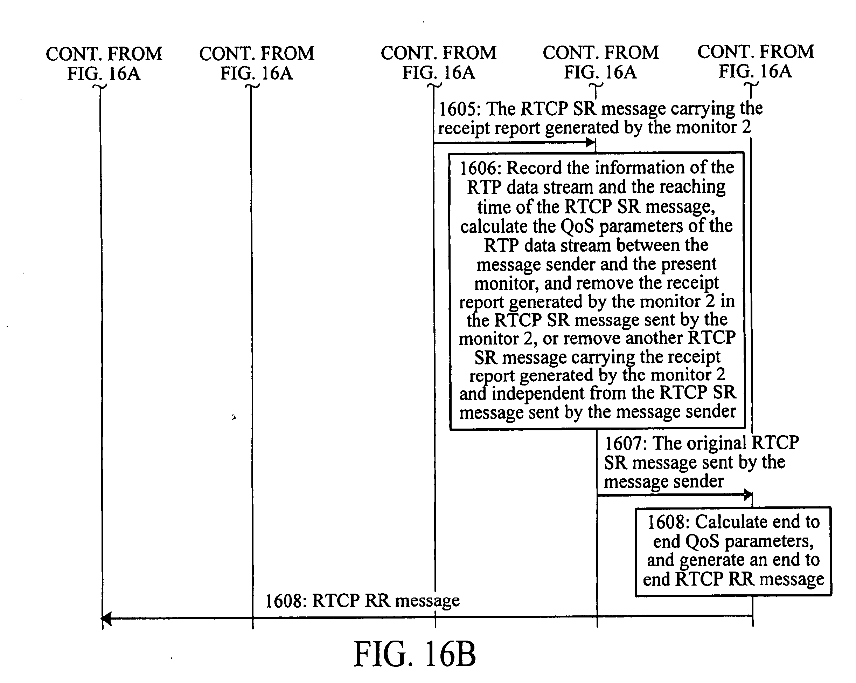

For ease of the implementation of the present invention performed by persons skilled in the art, a particular application embodiment is introduced in the following. As shown in FIG 16, two monitors, namely, a monitor 1 and a monitor 2, are set between a message sender and a message receiver. The method particularly includes the following steps.

In step 1601, the message sender sends an RTP message and an RTCP SR message.

In step 1602, when the RTP message reaches the monitor 1, the monitor 1 extracts an SN from the RTP message for calculating a fraction lost, and extracts a timestamp for calculating a transmission delay and a delay jitter. When the RTCP SR message reaches the monitor 1, the monitor 1 records a reaching time of the RTCP SR message, calculates the fraction lost of the RTP data stream between the message sender and the present monitor in the time interval of the two adjacent RTCP SR messages, and the cumulative number of packets lost in the interval from the receiving of the first RTCP SR message sent by the message sender to the receiving of the current RTCP SR message sent by the message sender, according to a packet count in the RTCP SR message sent by the message sender, and generates a receipt report according to the calculated delay jitter. If a number of RRBs in the reached RTCP SR message is smaller than 31, the generated receipt report is put after the existing RRBs in the RTCP SR message. If the number of the RRBs in the reached RTCP SR message is equal to 31, a new RTCP SR message needs to be additionally generated, for saving the generated receipt report. In addition, if the generated receipt report is put after the existing RRBs in the RTCP SR message, IP addresses and port numbers of the message sender and the message receiver in the reached RTCP SR message remain unchanged.

In step 1603, the monitor 1 sends the RTCP SR message carrying the generated receipt report to the monitor 2.

In step 1604, when the RTP message reaches the monitor 2, the monitor 2 extracts the SN from the RTP message for calculating the fraction lost, and extracts the timestamp for calculating the transmission delay and the delay jitter. When the RTCP SR message sent by the message sender reaches the monitor 2, no matter the message is modified or not, the monitor 2 records a reaching time of the RTCP SR message, calculates the fraction lost of the RTP data stream between the message sender and the present monitor in the time interval of the two adjacent RTCP SR messages, and the cumulative number of packets lost in the interval from the receiving of the first RTCP SR message sent by the message sender to the receiving of the current RTCP SR message sent by the message sender, according to a packet count in the RTCP SR message sent by the message sender. In addition, if the monitor 1 puts the generated receipt report into the RTCP SR message sent by the message sender, the monitor 2 calculates the QoS parameters of the RTP data stream between the monitor 1 and the present monitor. Particularly, firstly according to the LSR and the DLSR in the receipt report, and the time when the RTCP SR message reaches the present monitor recorded by the present monitor, a transmission delay of the RTCP SR message between the two monitors is calculated, and then, the fraction lost, the cumulative number of packets lost, and the transmission delay jitter in the receipt report are compared with the QoS parameters calculated by the present monitor, and then the QoS parameters between the two corresponding monitors are calculated, so as to measure the QoS over the network segments. In addition, if the receipt report generated by the monitor 1 exists in the RTCP SR message sent by the message sender, the monitor 2 puts the generated receipt report into the original position of the receipt report generated by the monitor 1 in the RTCP SR message sent by the message sender. If the monitor 1 saves the receipt report generated by the monitor 1 in a generated new RTCP SR message, the monitor 2 removes the new RTCP SR message, and generates a new RTCP SR message for saving the generated receipt report, or the monitor 2 does not remove the new RTCP SR message, but put the generated receipt report into the original position of the receipt report generated by the monitor 1 in the new RTCP SR message. In brief, the generated receipt report may be stored in another RTCP SR message independent of the RTCP SR message sent by the message sender.

In step 1605, the monitor 2 provides the RTCP SR message carrying the receipt report generated by the monitor 2 itself to the monitor 3.

In step 1606, when the RTP message reaches the monitor 3, the monitor 3 extracts the SN from the RTP message for calculating the fraction lost, and extracts the timestamp for calculating the transmission delay and the delay jitter. When the RTCP SR message sent by the message sender reaches the monitor 3, no matter the message is modified or not, the monitor 3 records a reaching time of the RTCP SR message, calculates the fraction lost of the RTP data stream between the message sender and the present monitor in the time interval of the two adjacent RTCP SR messages, and the cumulative number of packets lost in the interval from the receiving of the first RTCP SR message sent by the message sender to the receiving of the current RTCP SR message sent by the message sender, according to a packet count in the RTCP SR message sent by the message sender. In addition, if the monitor 2 puts the generated receipt report into the RTCP SR message sent by the message sender, the monitor 3 calculates the QoS parameters of the RTP data stream between the monitor 2 and the present monitor. Particularly, firstly according to the LSR and the DLSR in the receipt report, and the time when the RTCP SR message reaches the present monitor recorded by the present monitor, a transmission delay of the RTCP SR message between the two monitors is calculated, and then, the fraction lost, the cumulative number of packets lost, and the transmission delay jitter in the receipt report are compared with the QoS parameters calculated by the present monitor, and then the QoS parameters between the two corresponding monitors are calculated, so as to measure the QoS over the network segments. In addition, the monitor 3 further needs to remove the receipt report generated by the monitor 2 in the RTCP SR message, and needs to restore the original RTCP SR message sent by the message sender. If the monitor 2 generates a new RTCP SR message for saving the generated receipt report, the new RTCP SR message is not provided to the message receiver.

In step 1607, the monitor 3 provides the original RTCP SR message sent by the message sender to the message receiver.

In step 1608, the end to end QoS parameters are calculated, the end to end RTCP RR message is generated, and the RTCP RR message is returned to the message sender.

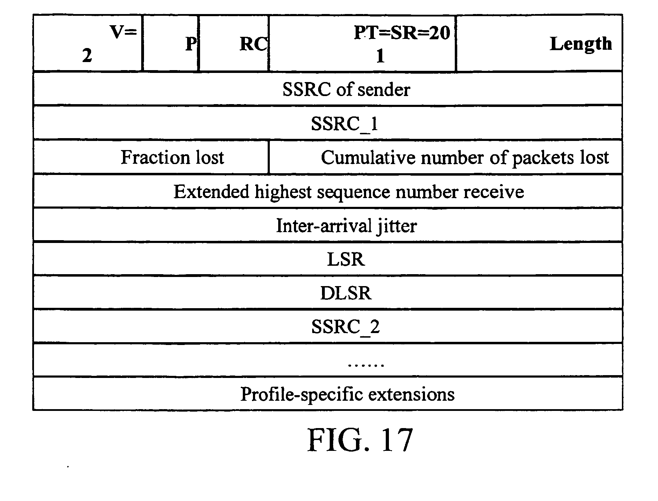

The message receiver receives the RTCP SR message sent by the message sender, and may return the RTCP RR message to the message sender. The format of the RTCP RR message is as shown in FIG 17. It may be known from FIGs. 13 and 17 that as compared with the RTCP SR message, the RTCP RR message is identical to the format of the RTCP SR message only except that the RTCP RR message does not have sending information.

In the embodiment of the present invention, the monitor only needs to put the generated receipt report into the RTCP SR message sent by the message sender, so as to send the generated receipt report to the adjacent downstream monitor, or only needs to generate a new RTCP SR message for saving the generated receipt report and transmit the new RTCP SR message together with the RTCP SR message sent by the message sender, so as to send the generated receipt report to the adjacent downstream monitor. In this manner, the monitor needs not to know the IP address and the port number of the downstream monitor, thereby alleviating burdens of the monitor.

In addition, due to the above reasons, the generated receipt report reaches the adjacent downstream monitor together with the RTCP SR message sent by the message sender, instead of reaching the adjacent downstream monitor through other paths, and thus the measurement result definitely reflects the actual performance of the RTP data stream on the transmission path.

In the embodiment of the present invention, even the monitor generates the new RTCP SR message and provides the new RTCP SR message for the adjacent downstream monitor, the adjacent downstream monitor may also not return any message, so that as compared with the active measurement method, the network burden is not increased too much.

In the embodiment of the present invention, the monitor provides the QoS parameters of the RTP data stream between the message sender and the present monitor to the adjacent downstream monitor, the adjacent downstream monitor calculates the QoS parameters of the RTP data stream between the two monitors, according to the parameters and the calculated QoS parameters of the RTP data stream between the message sender and the present monitor, so as to measure the QoS over the network segments.

In an embodiment, the present invention further provides a system for transmitting an RTP/ RTCP message, which includes a message sender, a first monitor, a second monitor, and a message receiver. The message sender is configured to send an RTCP SR message. The first monitor is configured to receive the RTCP SR message sent by the message sender, calculate QoS parameters of an RTP data stream between a message sender and a present monitor, generate a new RTCP SR message according to the RTCP SR message and the calculated QoS parameters, and send the new RTCP SR message. The generation of the new RTCP SR message may be simply considered as that the QoS parameters calculated by the present monitor is increased in the RTCP SR message, and the particular procedure may be obtained with reference to the above mentioned, so it is not described here. The second monitor is configured to receive the new RTCP SR message, calculate QoS parameters of an RTP data stream corresponding to the new RTCP SR message between the message sender and the present monitor, calculate QoS parameters of the RTP data stream between an adjacent upstream monitor and the present monitor according to the QoS parameters carried in the new RTCP SR message and the calculated QoS parameters, restore the new RTCP SR to the original RTCP SR message, and send the original RTCP SR message to a message receiver. The restoring of the original RTCP SR message may be simply considered as that after the QoS parameters carried in the new RTCP SR message are deleted, the original RTCP SR message sent by the sender is restored, and the particular implementation procedure may be obtained with reference to the above-mentioned. The message receiver is configured to receive the original RTCP SR message, calculate QoS parameters between the sender and the receiver, generate an RTCP RR message, and send the RTCP RR message to the sender.

Preferably, the system at least includes an intermediate monitor between the first monitor and the second monitor. The intermediate monitor is configured to receive the new RTCP SR message, calcu late the QoS parameters of the RTP data stream corresponding to the new RTCP SR message between the message sender and the present monitor, and generate a local new RTCP SR message according to the QoS parameters carried in the new RTCP SR message and the calculated QoS parameters, and send the local new RTCP SR message. The generating of the local new RTCP SR message may be simply considered as that the QoS parameter carried in the received new RTCP SR message is replaced by the QoS parameters calculated by the present monitor, and the particular implementation manner may be obtained with reference to the above mentioned. The intermediate monitor is further configured to calculate the QoS parameters of the RTP data stream between the adjacent upstream monitor and the present monitor, according to the QoS parameters carried in the received new RTCP SR message and the calculated QoS parameters.

The implementation procedure of functions and effects of each unit in the system and functions and effects of the corresponding units in the device are not described in detail here.

The above descriptions are merely preferred embodiments of the present invention. It should be noted by persons of ordinary skill in the art that modifications and improvements may be made without departing from the principle of the present invention, which should be construed as falling within the scope of the present invention as defined by the appended claims.

## Claims

1. A device for forwarding a Real Time Control Protocol sender report, RTCP SR, message, **characterized by** comprising:
a message receiving unit, configured to receive a first RTCP SR message from a message sender or an adjacent upstream monitor;
a quality of service, QoS, parameter calculation unit, configured to calculate QoS parameters of a Real Time Protocol, RTP, data stream corresponding to the RTCP SR message between the message sender and the device;
a new message generating unit, configured to generate a second RTCP SR message, according to the first RTCP SR message received by the message receiving unit and the QoS parameters calculated by the QoS parameter calculation unit; and
a message providing unit, configured to provide the second RTCP SR message generated by the new message generating unit to an adjacent downstream monitor.

2. The device according to claim 1, **characterized in that**:
the message receiving unit is further configured to receive a RTP message, provide the RTP message to the QoS parameter calculation unit;
the QoS parameter calculation unit is further configured to extract a sequence number, SN, in the RTP message for calculating a fraction lost, and extract a timestamp for calculating a transmission delay and a delay jitter.

3. The device according to claim 1 or claim 2, **characterized in that**:
the new message generating unit generates the second RTCP SR message in the following manner:
generate a receipt report according to the calculated QoS parameters of the RTP data stream between the message sender and the device; and
put the receipt report into the Receipt Report Block, RRB, of the first RTCP SR message, so as to generate the second RTCP SR message.

4. A method for forwarding a Real Time Control Protocol sender report, RTCP SR, message, **characterized by** comprising;
receiving (1201), by a first monitor, a first RTCP SR message from a message sender or an adjacent upstream monitor;
calculating (1201), by the first monitor, quality of service, QoS, parameters of a Real Time Protocol, RTP data stream corresponding to the RTCP SR message between the message sender and the first monitor;
generating (1202), by the first monitor, a second RTCP SR message according to the first RTCP SR message and the calculated QoS parameters;
providing (1203), the second RTCP SR message to an adjacent downstream monitor.

5. The method according to claim 4, **characterized in that** the method further comprises:
receiving, by the first monitor, a RTP message;
extracting a sequence number, SN, in the RTP message for calculating a fraction lost; and
extracting a timestamp for calculating a transmission delay and a delay jitter.

6. The method according to claim 4 or claim 5, wherein generating a second RTCP SR message according to the first RTCP SR message and the calculated QoS parameters comprises:
generating, by the first monitor, a receipt report according to the calculated QoS parameters between the message sender and the first monitor; and
putting, by the first monitor, the receipt report, into a Receipt Report Block, RRB of the first RTCP SR message, so as to generate the second RTCP SR message.

## Patentansprüche

1. Vorrichtung zum Weiterleiten einer Echtzeit-Steuerprotokoll-Sendermeldungs-Nachricht, RTCP-SR-Nachricht, **dadurch gekennzeichnet, dass** sie Folgendes umfasst:
eine Nachrichtenempfangseinheit, die konfiguriert ist, eine erste RTCP-SR-Nachricht von einem Nachrichtensender oder einer benachbarten vorgeordneten Überwachungseinrichtung zu empfangen;
eine Dienstqualitätsparameter-Berechnungseinheit, QoS-Parameter-Berechnungseinheit, die konfiguriert ist, QoS-Parameter eines Echtzeitprotokoll-Datenstroms, RTP-Datenstroms, der der RTCP-SR-Nachricht entspricht, zwischen dem Nachrichtensender und der Vorrichtung zu berechnen;
eine Erzeugungseinheit für neue Nachrichten, die konfiguriert ist, eine zweite RTCP-SR-Nachricht in Übereinstimmung mit der durch die Nachrichtenempfangseinheit empfangenen ersten RTCP-SR-Nachricht und den durch die QoS-Parameter-Berechnungseinheit berechneten QoS-Parametern zu erzeugen; und
eine Nachrichtenbereitstellungseinheit, die konfiguriert ist, die durch die Erzeugungseinheit für neue Nachrichten erzeugte zweite RTCP-SR-Nachricht einer benachbarten nachgeordneten Überwachungseinrichtung bereitzustellen.

2. Vorrichtung nach Anspruch 1, **dadurch gekennzeichnet, dass**:
die Nachrichtenempfangseinheit ferner konfiguriert ist, eine RTP-Nachricht zu empfangen und die RTP-Nachricht der QoS-Parameter-Berechnungseinheit bereitzustellen;
die QoS-Parameter-Berechnungseinheit ferner konfiguriert ist, eine Folgennummer, SN, in der RTP-Nachricht zum Berechnen eines Bruchteilverlusts zu extrahieren und
einen Zeitstempel zum Berechnen einer Übertragungsverzögerung und eines Verzögerungs-Jitters zu extrahieren.

3. Vorrichtung nach Anspruch 1 oder Anspruch 2, **dadurch gekennzeichnet, dass**:
die Erzeugungseinheit für neue Nachrichten die zweite RTCP-SR-Nachricht auf die folgende Art erzeugt:
Erzeugen einer Empfangsmeldung in Übereinstimmung mit den berechneten QoS-Parametern des RTP-Datenstroms zwischen dem Nachrichtensender und der Vorrichtung; und
Setzen der Empfangsmeldung in den Empfangsmeldungsblock, RRB, der ersten RTCP-SR-Nachricht, um die zweite RTCP-SR-Nachricht zu erzeugen.

4. Verfahren zum Weiterleiten einer Echtzeit-Steuerprotokoll-Sendermeldungs-Nachricht, RTCP-SR-Nachricht, **dadurch gekennzeichnet, dass** es Folgendes umfasst:
Empfangen (1201) einer ersten RTCP-SR-Nachricht von einem Nachrichtensender oder einer benachbarten vorgeordneten Überwachungseinrichtung durch eine erste Überwachungseinrichtung;
Berechnen (1201) von Dienstqualitäts-Parametern, QoS-Parametern, eines Echtzeitprotokoll-Datenstroms, RTP-Datenstroms, der der RTCP-SR-Nachricht entspricht,
zwischen dem Nachrichtensender und der ersten Überwachungseinrichtung durch die erste Überwachungseinrichtung;
Erzeugen (1202) einer zweiten RTCP-SR-Nachricht in Übereinstimmung mit der ersten RTCP-SR-Nachricht und den berechneten QoS-Parametern durch die erste Überwachungseinrichtung; und
Bereitstellen (1203) der zweiten RTCP-SR-Nachricht einer benachbarten nachgeordneten Überwachungseinrichtung.

5. Verfahren nach Anspruch 4, **dadurch gekennzeichnet, dass** das Verfahren ferner Folgendes umfasst:
Empfangen einer RTP-Nachricht durch die erste Überwachungseinrichtung;
Extrahieren einer Folgennummer, SN, in der RTP-Nachricht zum Berechnen eines Bruchteilverlusts; und
Extrahieren eines Zeitstempels zum Berechnen einer Übertragungsverzögerung und eines Verzögerungs-Jitters.

6. Verfahren nach Anspruch 4 oder 5, wobei das Erzeugen einer zweiten RTCP-SR-Nachricht in Übereinstimmung mit der ersten RTCP-SR-Nachricht und den berechneten QoS-Parametern Folgendes umfasst:
Erzeugen einer Empfangsmeldung in Übereinstimmung mit den berechneten QoS-Parametern zwischen dem Nachrichtensender und der ersten Überwachungseinrichtung durch die erste Überwachungseinrichtung; und
Setzen der Empfangsmeldung in einen Empfangsmeldungsblock, RRB, der ersten RTCP-SR-Nachricht durch die erste Überwachungseinrichtung, um die zweite RTCP-SR-Nachricht zu erzeugen.

## Revendications

1. Dispositif d'acheminement d'un message de rapport d'expéditeur à Protocole de Contrôle en Temps Réel, RTCP SR, **caractérisé en ce qu'**il comprend :
une unité de réception de message, configurée pour recevoir un premier message RTCP SR depuis un expéditeur de message ou un contrôleur amont adjacent ;
une unité de calcul de paramètres de qualité de service, QoS, configurée pour calculer des paramètres QoS d'un train de données à Protocole en Temps Réel, RTP, correspondant au message RTCP SR entre l'expéditeur du message et le dispositif ;
une unité de génération de nouveau message, configurée pour générer un second message RTCP SR, en fonction du premier message RTCP SR reçu par l'unité de réception de message et des paramètres QoS calculés par l'unité de calcul de paramètres QoS ; et
une unité de délivrance de message, configurée pour fournir le second message RTCP SR généré par l'unité de génération de nouveau message à un contrôleur aval adjacent.

2. Dispositif selon la revendication 1, **caractérisé en ce que** :
l'unité de réception de message est configurée en outre pour recevoir un message RTP, fournir le message RTP à l'unité de calcul de paramètres QoS ;
l'unité de calcul de paramètres QoS est configurée en outre pour extraire un numéro de séquence, SN, dans le message RTP afin de calculer une fraction perdue, et extraire une estampille temporelle afin de calculer un retard de transmission et une gigue de retard.

3. Dispositif selon la revendication 1 ou la revendication 2, **caractérisé en ce que** :
l'unité de génération de nouveau message génère le second message RTCP SR de la manière suivante :
en générant un rapport de réception en fonction des paramètres QoS calculés du train de données RTP entre l'expéditeur de message et le dispositif ; et
en insérant le rapport de réception dans le Bloc de Rapport de Réception, RRB, du premier message RTCP SR, de façon à générer le second message RTCP SR.

4. Procédé d'acheminement d'un message de rapport d'expéditeur à Protocole de Contrôle en Temps Réel, RTCP SR, **caractérisé en ce qu'**il comprend :
la réception (1201), par un premier contrôleur, d'un premier message RTCP SR depuis un expéditeur de message ou un contrôleur amont adjacent ;
le calcul (1201), par le premier contrôleur, de paramètres de qualité de service, QoS, d'un train de données à Protocole en Temps Réel, RTP, correspondant au message RTCP SR entre l'expéditeur du message et le premier contrôleur ;
la génération (1202), par le premier contrôleur, d'un second message RTCP SR en fonction du premier message RTCP SR et des paramètres QoS calculés ;
la délivrance (1203) du second message RTCP SR à un contrôleur aval adjacent.

5. Procédé selon la revendication 4, **caractérisé en ce qu'**il comprend en outre :
la réception, par le premier contrôleur, d'un message RTP ;
l'extraction d'un numéro de séquence, SN, dans le message RTP afin de calculer une fraction perdue ; et
l'extraction d'une estampille temporelle afin de calculer un retard de transmission et une gigue de retard.

6. Procédé selon la revendication 4 ou la revendication 5, dans lequel la génération d'un second message RTCP SR en fonction du premier message RTCP SR et des paramètres QoS calculés comprend :
la génération, par le premier contrôleur, d' un rapport de réception en fonction des paramètres QoS calculés entre l'expéditeur de message et le premier contrôleur ; et
l'insertion, par le premier contrôleur, du rapport de réception, dans un Bloc de Rapport de Réception, RRB, du premier message RTCP SR, de façon à générer le second message RTCP SR.
